# EUROPEAN PATENT APPLICATION

(11) **EP 4 827 008 A1**
(43) Date of publication of application: **21.10.2026**
(21) Application number: 24911440.6
(22) Date of filing: 27.12.2024
(51) Int. Cl.: H04B 7/06

(54) **COMMUNICATION METHOD AND COMMUNICATION APPARATUS**

(30) Priority: 29.12.2023 CN 202311868106
(71) Applicant: Huawei Technologies Co., Ltd., Shenzhen, Guangdong 518129 (CN)
(72) Inventor: CHEN, Shujing, Shenzhen, Guangdong 518129 (CN); QIN, Qibo, Shenzhen, Guangdong 518129 (CN); GAO, Junhui, Shenzhen, Guangdong 518129 (CN)
(74) Representative: Epping - Hermann - Fischer
(86) International application number: PCT/CN2024/143096
(87) International publication number: WO 2025/140520

(57) **Abstract**

A communication method and a communication apparatus are provided. The method includes: obtaining a first basis, where the first basis is a channel basis of a first network device, the first basis is formed by L columns of basis vectors, and L is a positive integer; receiving a first reference signal sent by the first network device; determining a first superposition coefficient vector based on the first reference signal and the first basis, where the first superposition coefficient vector includes K superposition coefficients, and K is a positive integer less than or equal to L; and sending the first superposition coefficient vector and a first basis selection vector to a second network device, where the first superposition coefficient vector, the first basis selection vector, and the first basis jointly represent a first channel matrix of the first network device, and the first basis selection vector includes column indexes that are in the first basis and that correspond to the K superposition coefficients.

## Description

This application claims priority to Chinese Patent Application No. 202311868106.9, filed with the China National Intellectual Property Administration on December 29, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

To improve spectral efficiency of a system, a massive multiple-input multiple-output (massive multiple-input multiple-output, massive MIMO) technology has been widely applied. When the massive MIMO technology is used, a network device needs to precode data before sending the data to a terminal device. How the network device precodes the data is mainly determined based on channel state information (channel state information, CSI) of a downlink channel fed back by the terminal device to the network device.

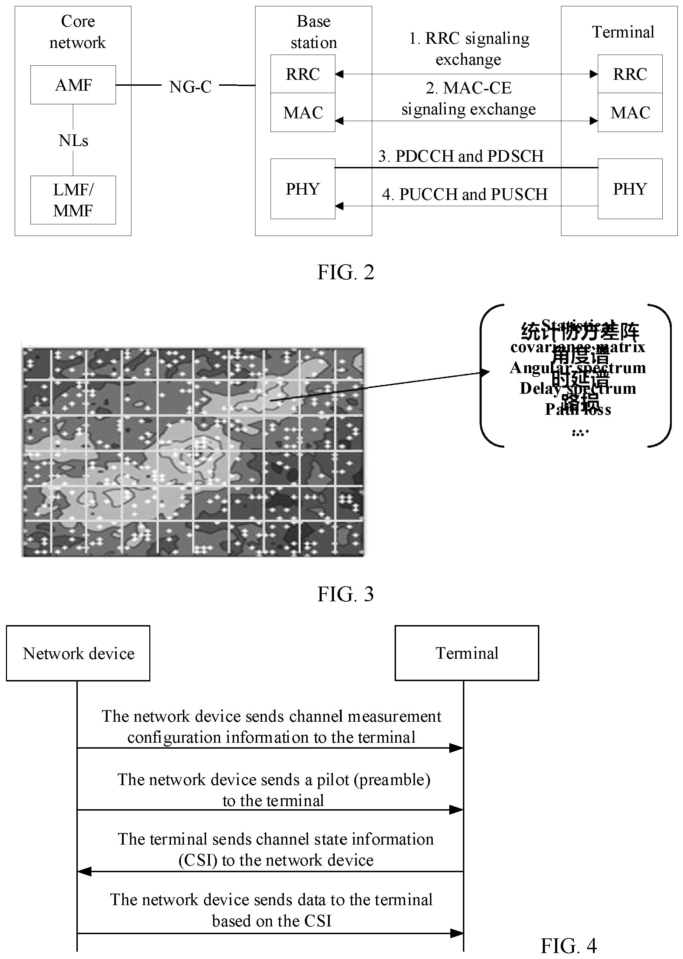

For a time division duplexing (time division duplexing, TDD) system, because uplink and downlink channels operate in a same frequency band, channel reciprocity can be utilized to obtain CSI of the downlink channel through the uplink channel, thereby determining a codebook for precoding. However, for a frequency division duplexing (frequency division duplexing, FDD) system, because an interval between uplink and downlink frequency bands is greater than a bandwidth, uplink and downlink channels do not have complete reciprocity, and uplink channel information cannot be directly used for accurate downlink precoding. However, in a conventional FDD system, a network device needs to rely on CSI feedback from a user. FIG. 4 shows a basic flowchart of CSI measurement performed by a network device and a terminal device. The network device needs to first send configuration information used for channel measurement, to notify the terminal device of channel measurement time and behavior; then the network device sends a pilot signal to the terminal device; the terminal device measures the pilot signal sent by the network device, to determine CSI; and the terminal device feeds back the CSI to the network device. The network device sends data based on the CSI fed back by the terminal device.

In a massive MIMO contiguous networking scenario, inter-cell interference is severe. If an original downlink channel reconstruction technology is still used to obtain CSI, the obtained CSI may include interference information, affecting precoding performance. Therefore, an interference channel needs to be measured. During measurement of the interference channel, a network device causing interference to the terminal device (referred to as an interfering network device) sends a pilot signal to the terminal device; the terminal device measures the pilot signal; and the terminal device feeds back state information of the interference channel to a network device serving the terminal device (referred to as a serving network device).

However, measuring the interference channel increases long-periodicity basis feedback overheads.

### SUMMARY

This application provides a communication method and a communication apparatus. In the method, a first basis of an interfering station may be delivered to a terminal device as prior information. When performing interference channel feedback, the terminal device may feed back only a position index of an interference channel in the first basis and a superposition coefficient, which helps reduce feedback overheads.

According to a first aspect, a communication method is provided. The method may be performed by a terminal device, or may be performed by a module (for example, a chip or a circuit) of a terminal device. This is not limited herein. For ease of description, an example in which the method is performed by the terminal device is used below for description.

The method may include: obtaining a first basis, where the first basis is a channel basis of a first network device, the first basis is formed by L columns of basis vectors, and L is a positive integer; receiving a first reference signal sent by the first network device; determining a first superposition coefficient vector based on the first reference signal and the first basis, where the first superposition coefficient vector includes K superposition coefficients, and K is a positive integer less than or equal to L; and sending the first superposition coefficient vector and a first basis selection vector to a second network device, where the first superposition coefficient vector, the first basis selection vector, and the first basis jointly represent a first channel matrix of the first network device, the first basis selection vector includes K column indexes, and the K column indexes are indexes of basis vectors that are in the first basis and that correspond to the K superposition coefficients. According to the foregoing solution, the terminal device may obtain the first basis and the first reference signal sent by an interfering station (for example, the first network device). In addition, the terminal device may compute the first superposition coefficient vector based on the first basis and a channel estimation result of the first reference signal, and report the first superposition coefficient vector, so that long-periodicity basis information does not need to be reported, thereby reducing interference channel feedback overheads. Furthermore, because a data amount for interference channel feedback is reduced, a data amount fed back from a serving station to the interfering station is also reduced, thereby reducing a delay for interference channel feedback.

With reference to the first aspect, in some implementations of the first aspect, determining the first superposition coefficient vector based on the first reference signal and the first basis includes: determining a second channel matrix based on the first reference signal; determining a second superposition coefficient vector based on the second channel matrix and a second basis, where the second basis is constructed in a row that is in the first basis and that corresponds to a position index of the first reference signal in spatial-frequency domain, a dimension of the second channel matrix is MN₁×1, a dimension of the second basis is MN₁×1, M is a quantity of antenna ports for receiving the first reference signal, N is a quantity of frequency domain units for carrying the first reference signal, the second superposition coefficient vector includes L superposition coefficients, a dimension of the second superposition coefficient vector is L×1, M and N₁ are positive integers, and L is less than or equal to MN₁; and determining the first superposition coefficient vector based on the second superposition coefficient vector, where the K superposition coefficients are K elements with largest amplitudes in the second superposition coefficient vector.

According to the foregoing solution, the row that is in the first basis and that corresponds to the position index of the first reference signal in spatial-frequency domain may be determined, so that the second superposition coefficient vector is computed based on a channel estimation result of the reference signal, and the first superposition coefficient vector with a smaller data amount is further determined for reporting, thereby reducing feedback overheads.

With reference to the first aspect, in some implementations of the first aspect, a smaller value of L indicates lower density of the first reference signal.

According to the foregoing solution, the terminal device receives the first reference signal sent by the interfering station, and the first reference signal may be a sparse reference signal, thereby reducing reference signal overheads.

With reference to the first aspect, in some implementations of the first aspect, the method further includes: multiplying the first superposition coefficient vector by a third basis to obtain the first channel matrix, where the third basis is formed by columns that are in the first basis and that correspond to K position indexes in the first basis selection vector.

According to the foregoing solution, the terminal device may determine a projection of the channel matrix based on the columns that are in the first basis and that correspond to the K position indexes, and the channel matrix may be restored based on the projection of the channel matrix and the first superposition coefficient vector, which helps reduce computational overheads.

With reference to the first aspect, in some implementations of the first aspect, the method further includes: receiving a second reference signal sent by the first network device and a third reference signal sent by the second network device, where time domain resources, frequency domain resources, and pilot sequences of the second reference signal and the third reference signal are the same; determining a third channel matrix based on the second reference signal and the third reference signal, where the third channel matrix is a sum of a fourth channel matrix of the first network device and a first channel matrix of the second network device; and determining a fourth channel matrix of the second network device based on the first channel matrix and the third channel matrix.

According to the foregoing solution, a joint channel of the interfering station and the serving station may be determined based on reference signals sent by the interfering station and the serving station (for example, the second network device), where the joint channel is a sum of the fourth channel matrix of the first network device and the first channel matrix of the second network device; and a channel matrix from the serving station to the terminal is determined based on the interference channel.

With reference to the first aspect, in some implementations of the first aspect, the method further includes: obtaining a fourth basis, where the fourth basis is a channel basis of the second network device, the fourth basis is formed by R columns of basis vectors, and R is a positive integer; determining a third superposition coefficient vector based on the fourth channel matrix and the fourth basis, where the third superposition coefficient vector includes Q superposition coefficients, and Q is a positive integer less than or equal to R; and sending the third superposition coefficient vector and a second basis selection vector to the second network device, where the third superposition coefficient vector, the second basis selection vector, and the fourth basis jointly represent the fourth channel matrix of the second network device, the fourth channel matrix is a channel matrix from the second network device to the terminal device, the second basis selection vector includes Q column indexes, and the Q column indexes are indexes of basis vectors that are in the fourth basis and that correspond to the Q superposition coefficients.

According to the foregoing solution, the terminal device may compute the third superposition coefficient vector based on the first basis and the channel matrix from the serving station to the terminal, and report the third superposition coefficient vector, which helps reduce channel feedback overheads.

With reference to the first aspect, in some implementations of the first aspect, the first basis, the second basis, or the fourth basis is a basis of a same type, and the basis of the same type is: a spatial-frequency joint basis, or a spatial domain basis and a frequency domain basis; and the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

With reference to the first aspect, in some implementations of the first aspect, the basis vector is any one of a discrete Fourier transform DFT basis vector, a fast Fourier transform FFT basis vector, an oversampled DFT basis vector, an oversampled FFT basis vector, or a vector determined based on a preset rule.

According to a second aspect, a communication method is provided. The method may be performed by a second network device, or may be performed by a module (for example, a chip or a circuit) of a second network device. This is not limited herein. For ease of description, an example in which the method is performed by the terminal device is used below for description.

The method may include: sending a first basis and/or a fourth basis to the terminal device, where the first basis is a channel basis of a first network device, the first basis is formed by L columns of basis vectors, the fourth basis is a channel basis of the second network device, the fourth basis is formed by R columns of basis vectors, L is a positive integer, and R is a positive integer; receiving a first superposition coefficient vector and a first basis selection vector, where the first superposition coefficient vector, the first basis selection vector, and the first basis jointly represent a first channel matrix of the first network device, the first superposition coefficient vector includes K superposition coefficients, the first basis selection vector includes K column indexes, the K column indexes are indexes of basis vectors that are in the first basis and that correspond to the K superposition coefficients, and K is a positive integer less than or equal to L; and sending the first superposition coefficient vector and the first basis selection vector to the first network device.

According to the foregoing solution, the channel basis is sent to the terminal device, so that the terminal device can compute, for example, the first superposition coefficient vector based on the first basis and a channel estimation result of a reference signal of an interfering station, and report the first superposition coefficient vector, which helps reduce interference channel feedback overheads. Furthermore, because a data amount for interference channel feedback is reduced, a data amount fed back from a serving station to the interfering station is also reduced, thereby reducing a delay for interference channel feedback.

With reference to the second aspect, in some implementations of the second aspect, the K superposition coefficients are K elements with largest amplitudes in a second superposition coefficient vector, the second superposition coefficient vector is determined based on a second channel matrix and a second basis, the second basis is constructed in a row that is in the first basis and that corresponds to a position index of a first reference signal sent by the first network device in spatial-frequency domain, the second channel matrix is determined based on the first reference signal, a dimension of the second channel matrix is MN₁×1, a dimension of the second basis is MN₁×L, M is a quantity of antenna ports for sending the first reference signal, N₁ is a quantity of frequency domain units for carrying the first reference signal, the second superposition coefficient vector includes L superposition coefficients, a dimension of the second superposition coefficient vector is L×1, M and N₁ are positive integers, and L is less than or equal to MN₁.

According to the foregoing solution, the row that is in the first basis and that corresponds to the position index of the first reference signal in spatial-frequency domain may be determined, so that the second superposition coefficient vector is computed based on a channel estimation result of the reference signal, and the first superposition coefficient vector with a smaller data amount is further determined and reported, thereby reducing feedback overheads.

With reference to the second aspect, in some implementations of the second aspect, the method further includes: receiving the first basis from a core network device.

With reference to the second aspect, in some implementations of the second aspect, receiving the first channel basis from the core network device includes: receiving a first channel map of the first network device from the core network device, where the first channel map includes the first basis. According to the foregoing solution, the second network device may obtain the channel map of the interfering station, and send the channel map to the terminal device.

With reference to the second aspect, in some implementations of the second aspect, the method further includes: sending channel map request information to the core network device, where the channel map request information is used for requesting to obtain the first channel map.

With reference to the second aspect, in some implementations of the second aspect, the method further includes: sending a third reference signal; receiving a third superposition coefficient vector and a second basis selection vector, where the third superposition coefficient vector, the second basis selection vector, and the fourth basis jointly represent a fourth channel matrix of the second network device, the third superposition coefficient vector includes Q superposition coefficients, Q is a positive integer less than or equal to R, the second basis selection vector includes Q column indexes, and the Q column indexes are indexes of basis vectors that are in the fourth basis and that correspond to the Q superposition coefficients; and determining the fourth channel matrix based on the fourth basis, the third superposition coefficient vector, and the second basis selection vector. According to the foregoing solution, the second network device may obtain the third superposition coefficient vector of the channel matrix from the serving station to the terminal, and determine the channel matrix from the serving station to the terminal based on the fourth basis.

With reference to the second aspect, in some implementations of the second aspect, determining the fourth channel matrix based on the fourth basis, the third superposition coefficient vector, and the second basis selection vector includes: multiplying the third superposition coefficient vector by a fifth basis to obtain the fourth channel matrix, where the fifth basis is formed by columns that are in the fourth basis and that correspond to Q position indexes in the second basis selection vector. According to the foregoing solution, the terminal device may determine a projection of the channel matrix based on the columns that are in the fourth basis and that correspond to the Q position indexes, and the channel matrix may be restored based on the projection of the channel matrix and the third superposition coefficient vector, which helps reduce computational overheads.

With reference to the second aspect, in some implementations of the second aspect, the first basis, the second basis, a third basis, the fourth basis, or the fifth basis is a basis of a same type, and the basis of the same type is: a spatial-frequency joint basis, or a spatial domain basis and a frequency domain basis; and the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

With reference to the second aspect, in some implementations of the second aspect, the basis vector is any one of a discrete Fourier transform DFT basis vector, a fast Fourier transform FFT basis vector, an oversampled DFT basis vector, an oversampled FFT basis vector, or a vector determined based on a preset rule.

According to a third aspect, a communication method is provided. The method may be performed by a first network device, or may be performed by a module (for example, a chip or a circuit) of a first network device. This is not limited herein. For ease of description, an example in which the method is performed by the terminal device is used below for description.

The method may include: obtaining a first basis, where the first basis is a channel basis of the first network device, the first basis is formed by L columns of basis vectors, and L is a positive integer; sending a first reference signal to the terminal device; receiving a first superposition coefficient vector and a first basis selection vector, where the first superposition coefficient vector, the first basis selection vector, and the first basis jointly represent a first channel matrix of the first network device, the first channel matrix is determined based on the first reference signal, the first superposition coefficient vector includes K superposition coefficients, the first basis selection vector includes K column indexes, the K column indexes are indexes of basis vectors that are in the first basis and that correspond to the K superposition coefficients, and K is a positive integer less than or equal to L; and determining the first channel matrix based on the first basis, the first superposition coefficient, and the first basis selection vector.

According to the foregoing solution, the reference signal is sent to the terminal device, and the terminal device may compute, for example, the first superposition coefficient vector based on the first basis and a channel estimation result of the reference signal of an interfering station, and report the first superposition coefficient vector, which helps reduce interference channel feedback overheads. Furthermore, because a data amount for interference channel feedback is reduced, a data amount fed back from a serving station to the interfering station is also reduced, thereby reducing a delay for interference channel feedback.

With reference to the third aspect, in some implementations of the third aspect, the K superposition coefficients are K elements with largest amplitudes in a second superposition coefficient vector, the second superposition coefficient vector is obtained based on a second channel matrix and a second basis constructed in a row that is in the first basis and that corresponds to a position index of the first reference signal sent by the first network device in spatial-frequency domain, the second channel matrix is determined based on the first reference signal, a dimension of the second channel matrix is MN1×1, a dimension of the second basis is MN1×L, M is a quantity of antenna ports for sending the first reference signal, N1 is a quantity of frequency domain units for carrying the first reference signal, the second superposition coefficient vector includes L superposition coefficients, a dimension of the second superposition coefficient vector is L×1, M and N1 are positive integers, and L is less than or equal to MN1.

According to the foregoing solution, the row that is in the first basis and that corresponds to the position index of the first reference signal in spatial-frequency domain may be determined, so that the second superposition coefficient vector is computed based on a channel estimation result of the reference signal, and the first superposition coefficient vector with a smaller data amount is further determined and reported, thereby reducing feedback overheads.

With reference to the third aspect, in some implementations of the third aspect, determining the first channel matrix based on the first basis, the first superposition coefficient, and the first basis selection vector includes: multiplying the first superposition coefficient vector by a third basis to obtain the first channel matrix, where the third basis is formed by columns that are in the first basis and that correspond to K position indexes in the first basis selection vector.

According to the foregoing solution, the terminal device may determine a projection of the channel matrix based on the columns that are in the first basis and that correspond to the K position indexes, and the channel matrix may be restored based on the projection of the channel matrix and the first superposition coefficient vector, which helps reduce computational overheads.

With reference to the third aspect, in some implementations of the third aspect, a smaller value of L indicates lower density of the first reference signal.

According to the foregoing solution, reference signal overheads are reduced.

With reference to the third aspect, in some implementations of the third aspect, the method further includes: sending a second reference signal to the terminal device, where the second reference signal is used for determining a fourth channel matrix of a second network device.

With reference to the third aspect, in some implementations of the third aspect, the first basis, the second basis, or the third basis is a basis of a same type, and the basis of the same type is: a spatial-frequency joint basis, or a spatial domain basis and a frequency domain basis; and the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors. With reference to the third aspect, in some implementations of the third aspect, the basis vector is any one of a discrete Fourier transform DFT basis vector, a fast Fourier transform FFT basis vector, an oversampled DFT basis vector, an oversampled FFT basis vector, or a vector determined based on a preset rule.

According to a fourth aspect, a wireless communication apparatus is provided, including modules or units configured to perform the method according to any one of the first aspect or the possible implementations of the first aspect.

According to a fifth aspect, a wireless communication apparatus is provided, including modules or units configured to perform the method according to any one of the second aspect or the possible implementations of the second aspect.

According to a sixth aspect, a wireless communication apparatus is provided, including modules or units configured to perform the method according to any one of the third aspect or the possible implementations of the third aspect.

According to a seventh aspect, a communication apparatus is provided, including a processor, where the processor is coupled to a memory, and may be configured to perform the method according to any possible implementation of the first aspect. In a possible implementation, the memory is included in the communication apparatus. In a possible implementation, the communication apparatus further includes a communication interface, and the processor is coupled to the communication interface.

In an implementation, the communication apparatus is a terminal device. When the communication apparatus is the terminal device, the communication interface may be a transceiver or an input/output interface. In a possible implementation, the transceiver may be a transceiver circuit. In a possible implementation, the input/output interface may be an input/output circuit.

In another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a communication apparatus is provided, including a processor, where the processor is coupled to a memory, and may be configured to perform the method according to any possible implementation of the second aspect, or may be configured to perform the method according to any possible implementation of the third aspect. In a possible implementation, the memory is included in the communication apparatus. In a possible implementation, the communication apparatus further includes a communication interface, and the processor is coupled to the communication interface.

In an implementation, the communication apparatus is a network device. When the communication apparatus is the network device, the communication interface may be a transceiver or an input/output interface. In a possible implementation, the transceiver may be a transceiver circuit. In a possible implementation, the input/output interface may be an input/output circuit.

In another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a ninth aspect, a communication apparatus is provided, including an input circuit, an output circuit, and a processing circuit. The processing circuit is configured to: receive a signal through the input circuit, and transmit a signal through the output circuit, so that the method according to any one of the first aspect to the third aspect and the possible implementations of the foregoing aspects is implemented.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter. The input circuit and the output circuit may be different circuits or may be a same circuit, and in this case, the circuit is used as the input circuit and the output circuit respectively at different moments. Specific implementations of the processor and the various circuits are not limited in embodiments of this application.

According to a tenth aspect, a processing apparatus is provided, including a processor and a memory. The processor is configured to: read instructions stored in the memory, receive a signal through a receiver, and transmit a signal through a transmitter, to perform the method according to any one of the first aspect to the third aspect and the possible implementations of the foregoing aspects.

In a possible implementation, there are one or more processors, and there are one or more memories.

In a possible implementation, the memory may be integrated with the processor, or the memory and the processor may be separately disposed.

In a specific implementation process, the memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the foregoing aspect may be a chip, and the processor may be implemented by hardware or software. When the hardware is used for implementation, the processor may be a logic circuit, an integrated circuit, or the like. When the software is used for implementation, the processor may be a general-purpose processor, and is implemented by reading software code stored in the memory. The memory may be integrated into the processor, or may be located outside the processor, and exist independently.

According to an eleventh aspect, a computer program product is provided. The computer program product includes a computer program (which may also be referred to as code or instructions). When the computer program is run, a computer is enabled to perform the method according to any one of the first aspect to the third aspect and the possible implementations of the foregoing aspects. According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the third aspect and the possible implementations of the foregoing aspects.

According to a thirteenth aspect, a chip system is provided, including a memory and a processor. The memory is configured to store a computer program, and the processor is configured to invoke the computer program from the memory and run the computer program, to enable a communication device on which the chip system is installed to perform the method according to any one of the first aspect to the third aspect and the possible implementations of the foregoing aspects.

The chip system may include an input circuit or interface for sending information or data, and an output circuit or interface for receiving information or data.

According to a fourteenth aspect, a communication system is provided, including at least one of the foregoing terminal device, the first network device, and the second network device.

### BRIEF DESCRIPTION OF DRAWINGS

FIG. 1 is a diagram of an example of a communication system to which this application is applicable;
FIG. 2 is a diagram of a structure of a network element according to this application;
FIG. 3 is a diagram of a channel map;
FIG. 4 is a schematic flowchart of CSI measurement performed by a network device and a terminal;
FIG. 5 is a diagram of a structure of an R16 codebook;
FIG. 6 is a diagram of an equivalent representation of a channel matrix ***H*** by using a column vector;
FIG. 7 is a diagram of matrix decomposition of a spatial-frequency joint channel ***h***;
FIG. 8 is a schematic flowchart of spatial-frequency joint codebook feedback combining long and short periodicities;
FIG. 9 is a schematic flowchart of a communication method according to an embodiment of this application;
FIG. 10 is a schematic flowchart of a communication method according to an embodiment of this application;
FIG. 11 is a block diagram of a communication apparatus according to an embodiment of this application; and
FIG. 12 is a block diagram of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) system or new radio (new radio, NR) and a future communication system, and vehicle-to-X (vehicle-to-X V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), machine to machine (machine to machine, M2M), and the like.

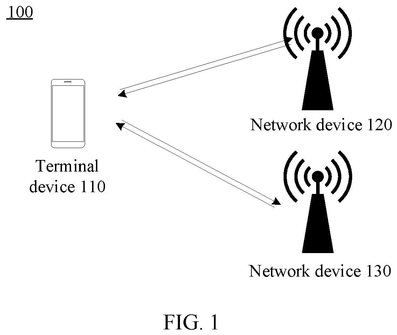

FIG. 1 is a diagram of a communication system according to an embodiment of this application. As shown in FIG. 1, the communication system 100 includes at least one terminal device, for example, a terminal device 110 shown in FIG. 1. The communication system 100 may further include at least one network device, for example, a network device 120 and/or a network device 130 shown in FIG. 1. The terminal device 110 may communicate with the network device 120/130 via a radio link to exchange information. It may be understood that the terminal device and the network device may also be referred to as communication devices or communication apparatuses. The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central units, CUs), one or more distributed units (distributed units, DUs), or one or more radio units (radio units, RUs). In different systems, the CU (or the CU-CP and the CU-UP), the DU, or the RU may alternatively have different names, but a person skilled in the art may understand meanings thereof. For example, the radio access network may also be an open radio access network (open radio access network, O-RAN) architecture. In an ORAN system, the CU may also be referred to as an O-CU (an open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module. For example, functions of the CU may be implemented by one entity or different entities. For example, the functions of the CU are further divided. To be specific, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle-to-everything (vehicle-to-everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, an apparatus configured to implement a function of the network device may be the network device, or may be an apparatus that can support the network device in implementing the function, for example, a chip system or a combined device or component that can implement the function of the access network device. The apparatus may be installed in the network device. In embodiments of this application, the chip system may include a chip, or may include a chip and another discrete component.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), self driving (self driving), remote medical (remote medical), a smart grid (smart grid), smart home, smart office, smart wearables, smart transportation, a smart city (smart city), an uncrewed aerial vehicle, and a robot. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. The terminal device may alternatively be a terminal device in the IoT system. The IoT is an important part of future information technology development. A main technical feature of the IoT is to connect things to a network by using a communication technology, to implement a smart network for human-machine interconnection and thing-thing interconnection. In embodiments of this application, the IoT technology can implement massive connections, deep coverage, and terminal power saving by using, for example, a narrowband (narrowband, NB) technology. In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device.

The network device and the terminal device may be deployed on land, including an indoor or outdoor device, a handheld device, or a vehicle-mounted device; may be deployed on water; or may be deployed on an airplane, a balloon, and a satellite in the air. Scenarios in which the network device and the terminal device are located are not limited in embodiments of this application.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF network element is a control plane network function provided by the operator network. In embodiments of this application, when the communication system 100 includes the AF network element and the SMF network element, the AF may send service-related information to the network device via the SMF. Optionally, a structure of a network element in this application is shown in FIG. 2, and mainly includes the following network elements and modules.
(1) An RRC signaling exchange module is a module used by the base station and the terminal to send and receive RRC signaling
(2) A medium access management/control (medium access control, MAC) signaling exchange module is a module used by the base station and the terminal to send and receive medium access control-control element (MAC control element, MAC-CE) signaling.
(3) A physical layer (physical layer, PHY) signaling and data exchange module is a module used by the base station and the terminal to send and receive uplink/downlink control signaling (for example, a physical downlink control channel (physical downlink control channel, PDCCH) and a physical uplink control channel (physical uplink control channel, PUCCH)) and uplink/downlink data (for example, data transmitted on a physical downlink shared channel (physical downlink shared channel, PDSCH) and data transmitted on a physical uplink shared channel (physical uplink shared channel, PUSCH)).
(4) The base station communicates with an AMF through an NG-C interface. The AMF is equivalent to a router for communication between the base station and a location management function (location management function, LMF)/map management function (map management function, MMF). The LMF implements UE location estimation. A map construction process is completed via the LMF/MMF. The AMF communicates with the LMF/MMF through an NLs interface.

It may be understood that, in this application, the PDSCH, the PDCCH, the PUSCH, and the PUCCH are merely used as examples of a downlink data channel, a downlink control channel, an uplink data channel, and an uplink control channel respectively. In different systems and different scenarios, the data channel and the control channel may have different names, and this is not limited in embodiments of this application.

For ease of understanding this application, the following describes some concepts in this application.

### 1. Channel map

The channel map is defined as a database, configured to store channel characteristics based on location information. The channel characteristic includes but is not limited to a channel statistical covariance matrix, an angular spectrum, a delay spectrum, a path loss, and the like. For example, FIG. 3 is a diagram of a channel map. In the channel map, a physical cell is divided into two-dimensional grid points (for example, each grid in FIG. 3 is referred to as a grid point), and each grid point stores several channel characteristics (for example, a channel statistical covariance matrix, an angular spectrum, a delay spectrum, and a path loss) in a form of a matrix, a vector, or a scalar.

A common channel map construction method is to construct a database based on historical measurement data, and establish a mapping relationship between location information and a channel characteristic. However, there is a limitation on the historical measurement data. For example, the historical measurement data is usually based on a channel characteristic of a known location, and a channel characteristic of an unknown location is supplemented by using an interpolation method, to obtain the channel map of the entire cell. With development of a digital twin technology, the channel map may be obtained by using a channel twin technology. For example, a computer may combine a prior environment map (for example, including environment information obtained through measurement), and use electromagnetic simulation computation to simulate reflection, diffraction, and scattering characteristics of multipath communication, thereby obtaining a deterministic channel for channel map construction.

### 2. Channel map-assisted communication technology

An increase in system bandwidth, an increase in terminal antennas, heavier network load, a sharp increase in radio channel dimensions (for example, the radio channel dimension may be extended to a plurality of dimensions such as a spatial domain dimension, a spatial-frequency domain dimension, and a frequency domain dimension), and a limitation on pilot measurement resources pose a significant challenge to high-precision measurement of a radio channel. Accurate measurement of the radio channel is foundation of mobile communication network research, which is crucial for design, analysis and optimization of wireless communication networks. However, a conventional reference signal (for example, a pilot symbol)-based radio channel measurement method cannot meet requirements of technologies such as a large bandwidth and multi-antenna. To resolve the problem of limited reference signal measurement resources in a wireless communication system, channel measurement with low pilot overheads may be implemented by using the channel map. For example, a channel covariance matrix at a specific location is provided by using the channel map, and sounding reference signal (sounding reference signal, SRS) overheads are reduced with the assistance of the channel covariance matrix.

### 3. Downlink channel reconstruction technology

In a 5G communication system, using a massive multiple-input multiple-output (massive multiple-input multiple-output, Massive MIMO) technology helps improve spectral efficiency of the system. When the MIMO technology is used, and a network device sends data to a terminal device, signal precoding needs to be performed based on channel state information (channel state information, CSI).

In a time division duplexing (time division duplexing, TDD) system, downlink CSI may be obtained based on channel reciprocity, for example, through downlink channel estimation by sending uplink SRS data. As the quantity of users increases and the load continues to grow, SRS round-robin transmission in large bandwidth scenarios may lead to insufficient SRS resources and severe channel aging.

In a frequency division duplexing (frequency division duplexing, FDD) system, because there is a large frequency spacing between an uplink channel and a downlink channel, the uplink channel and the downlink channel do not meet a direct reciprocity relationship, and uplink channel information cannot be used for accurate downlink precoding. In the FDD system, a user needs to feed back CSI of the downlink channel to a base station.

For example, FIG. 4 is a schematic flowchart of CSI measurement performed by a network device and a terminal, and the following steps may be included.

Step 1: The network device sends channel measurement configuration information to the terminal. The channel measurement configuration information is used for channel measurement configuration, for example, indicating channel measurement time to the terminal.

Step 2: The network device sends a channel state information reference signal (channel state information reference signal, CSI-RS) to the terminal, where the pilot is used for channel measurement. For example, the terminal receives the CSI-RS, and performs measurement based on the CSI-RS, to obtain CSI feedback information. Optionally, the CSI-RS may also be referred to as a CSI-RS pilot.

Step 3: The terminal sends channel state information to the network device. For example, the terminal sends channel state information such as a channel rank indicator (rank indicator, RI), a channel state indicator (channel quality indicator, CQI), and a precoding matrix indicator (precoding matrix indicator, PMI) to the network device.

Step 4: The network device sends data to the terminal based on the CSI. Based on the CSI fed back by the terminal, the network device determines precoding information and the like for sending service data, to transmit the service data.

Optionally, the channel state information (CSI) includes information that is reported by a receiving device to a sending device in a wireless communication system and that is used to describe a channel attribute of a communication link. The CSI may include, for example, but is not limited to, a precoding matrix indicator (PMI), a rank indicator (RI), a channel quality indicator (CQI), a CSI-RS resource indicator (CSI-RS resource indicator, CRI), and a layer indicator (layer indicator, LI). It should be understood that the foregoing listed specific content of the CSI is merely an example for description, and should not constitute any limitation on this application. The CSI may include one or more of the foregoing listed content, or may include other information that is different from the foregoing listed content and that represents CSI. This is not limited in this application.

### 4. An R16 codebook-based scheme for reference signal-based channel reconstruction

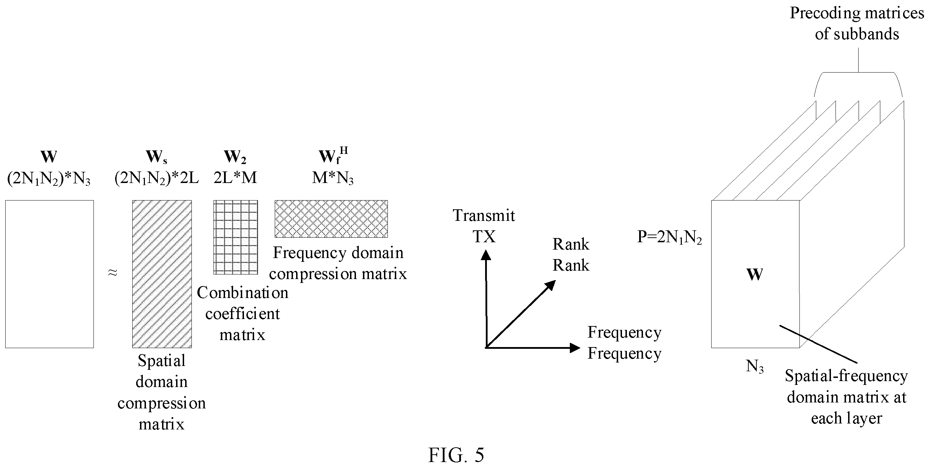

For example, the R16 codebook is a spatial-frequency dual-domain compressed codebook, channels of all subbands are compressed in frequency domain, and a structure of the codebook satisfies formula (1): $W = {W}_{s} {W}_{2} {W}_{f}^{H}$ (1) ${W}_{s} ∈ {ℂ}^{\left(2{N}_{1}{N}_{2}\right) \times 2 L}$ is a spatial domain compression matrix, ${W}_{2} ∈ {ℂ}^{2 L \times M}$ is a combination coefficient matrix, ${W}_{f} ∈ {ℂ}^{{N}_{3} \times M}$ is a frequency domain compression matrix, *N*₁ and *N*₂ are respectively a quantity of horizontal antenna ports (ports) and a quantity of vertical antenna ports of a base station, *L* is a quantity of spatial domain bases, and *M* is a quantity of frequency domain bases. For example, FIG. 5 is a diagram of a structure of the R16 codebook. The diagram shows each matrix and a dimension of the matrix. Optionally, spatial-frequency dual-domain compression means that quantization is performed by using sparseness of a channel in spatial domain and sparseness of the channel in frequency domain, and a quantity of weighting coefficients that need to be reported is reduced, thereby implementing channel matrix compression. However, the R16 codebook uses only a sparse characteristic of a channel in angle-delay domain, that is, related characteristics of spatial domain information on different subbands are used for feedback and compression. For example, a spatial domain basis, a frequency domain basis, and a combination coefficient need to be fed back, resulting in high feedback overheads. In addition, because the bases need to be reported, it is specified in the protocol that both the spatial domain basis and the frequency domain basis are discrete Fourier transform (discrete Fourier transform, DFT) codebooks, which limits sparseness of the combination coefficient matrix ***W***₂. Besides, in an actual channel, especially in a scenario in which a channel propagation environment changes slowly, the basis changes slowly, and long-periodicity feedback may be performed. However, R16 does not support reporting of the basis and the combination coefficient in different periodicities.

### 5. An R18 codebook-based scheme for reference signal-based channel reconstruction

To perform a sparse representation on a channel in spatial-frequency domain, fully explore a sparse characteristic of the channel, and consider a rule that different channel characteristics change at different speeds over time, for example, characteristics that path angle-delay information (a spatial-frequency joint basis) changes slowly and a path superposition coefficient (a superposition coefficient corresponding to the basis) changes quickly, a codebook feedback manner combining long and short periodicities is designed for the R18 codebook-based scheme for reference signal-based channel reconstruction, which helps reduce feedback overheads. For example, the following separately describes two cases of spatial-frequency joint compression and feedback and spatial-frequency independent compression and feedback.

### Case 1: Spatial-frequency joint compression and feedback

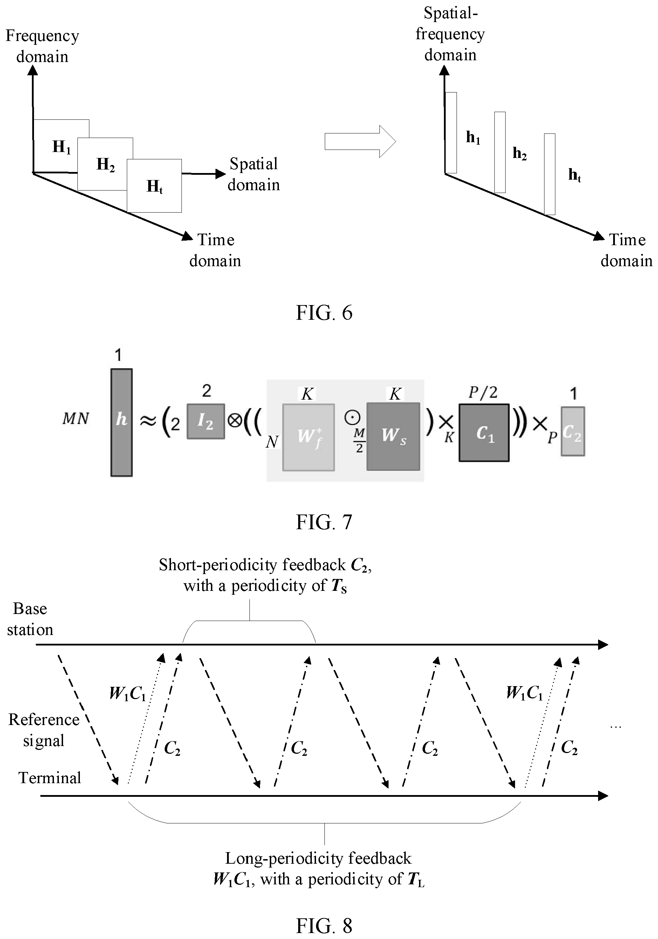

A downlink channel is used as an example. It is assumed that a terminal has a single antenna, and a matrix of the channel of the terminal satisfies formula (2): $H = S C {F}^{H} ∈ {ℂ}^{M \times N}$ (2) $S ∈ {ℂ}^{M \times L}$ is a spatial domain compression matrix, $F ∈ {ℂ}^{N \times L}$ is a frequency domain compression matrix, $C ∈ {ℂ}^{L \times L}$ is a combination coefficient matrix (which is a diagonal matrix), *M* is a quantity of base station antennas, *L* is a quantity of channel multipaths, and *N* is a quantity of frequency units (for example, the frequency unit is a subcarrier, a resource element (resource element, RE), a resource block (resource block, RB), a resource group (RB group, RBG), or a subband (subband)). For example, FIG. 6 is a diagram of an equivalent representation of a channel matrix ***H*** by using a column vector. It can be learned that, spatial-frequency domain channels ***H*₁, *H***₂, ..., and ***H**ₜ* represented by matrices shown in FIG. 6 may be equivalently represented by spatial-frequency domain column vectors ***h*₁, *h*₂***,* ..., and ***hₜ**.* An equivalent column vector satisfies formula (3): $h = \left({F}^{∗}⊙S\right) c ∈ {ℂ}^{MN \times 1} , c = diag \left(C\right)$ (3) *diag*(***C***) represents a column vector $\left(F*⊙S\right) ∈ {ℂ}^{2 MN \times L}$ formed by diagonal elements of the matrix ***C***, ⊙ represents a Khatri-Rao product, for example, ***A**⊙**B** =* [***a*₁** ⊗ ***b*₁**...***a**ₙ* ⊗ ***b**ₙ*], ***a**ₗ* is an *l*^{th} column of ***A**,* ⊗ is a Kronecker product (Kronecker product), ***b**ₗ* is an *l*^{th} column of ***B**,* and *l* is an integer greater than 0. The *l*^{th} (*i*=1, ..., and *N*) column of the matrix ***F****⊙***S*** may satisfy formula (4): $\left({F}^{∗}⊙S\right) \left[:,l\right] = {\left(F\left[:,l\right]\right)}^{∗} ⊗ S \left[:,l\right] ∈ {ℂ}^{MN \times 1}$ (4)

⊗ represents a Kronecker (Kronecker) product, and [: , *l*] represents the *l*^{th} column of the matrix. In the foregoing operations, a spatial-frequency domain channel represented by a matrix may be represented by a spatial-frequency domain column vector.

A statistical covariance matrix of the channel ***h*** represented by the column vector satisfies formula (5): ${R}_{h} = E \left\{h{h}^{H}\right\} = U Λ {U}^{H}$ (5) ${R}_{h} ∈ {ℂ}^{2 MN \times 2 MN}$ and 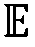 represent computation of an expectation for a random number/matrix, ***U*** is a matrix formed by eigenvectors of the covariance matrix ***R**ₕ*, an *i*^{th} column of ***U*** is an *i*^{th} eigenvector of ***R**ₕ,* a corresponding eigenvalue is an *i*^{th} element on a diagonal of the diagonal matrix ***Λ***, eigenvalues corresponding to each column of ***U*** are elements on the diagonal of the diagonal matrix ***Λ***, and elements on the diagonal of ***Λ*** are arranged in descending order. An inter-polarization average covariance matrix satisfies formula (6): ${\overline{R}}_{h} = E \left\{\frac{{h}_{+} {h}_{+}^{H} + {h}_{-} {h}_{-}^{H}}{2}\right\} = \overline{U} \overline{Λ} {\overline{U}}^{H}$ (6)

***h***₊ is a channel corresponding to positive polarization, ***h***₋ is a channel corresponding to negative polarization, ***U̅*** is a matrix formed by eigenvectors of the average covariance matrix ${\overline{R}}_{h} ∈ {ℂ}^{MN \times MN}$ , an *i*^{th} column of ***U̅*** is an *i*^{th} eigenvector of ***Rₕ,*** a corresponding eigenvalue is an *i*^{th} element on a diagonal of the diagonal matrix ***Λ̅*,** eigenvalues corresponding to each column of ***U̅*** are elements on the diagonal of the diagonal matrix ***Λ̅***, and the elements on the diagonal of ***Λ̅*** are arranged in descending order. In this case, an instantaneous channel satisfies formula (7): $h = U \hat{h} \approx {U}_{p} {\hat{h}}_{p}$ (7)

***U**ₚ* is a matrix formed by first *P* columns of the basis ***U**.* The channel has a sparse characteristic (that is, only a part of elements in ***ĥ*** are non-zero or have larger values) in angle-delay domain, and the angle-delay changes slowly (that is, at different moments ***h***₁, ***h***₂ ... ***h**ₜ, **U*** may be considered as basically unchanged or changing slowly, while ***ĥ***₁, ***ĥ***₂ ... ***ĥ****ₜ* change over time). In addition, by using KL decomposition (Karhunen-Loeve decomposition), when ***h*** is extended based on eigenvectors corresponding to *P* largest eigenvalues of the matrix ***Rₕ*** (that is, the first *P* columns of ***U*:** ***U**ₚ*), a truncated statistical mean square error is minimized. It is considered that the statistical covariance matrix may be approximated by using a polarization-averaged statistical covariance matrix, the instantaneous channel ***h*** satisfies formula (8): $h = U \hat{h} \approx \left({I}_{2}⊗{\overline{U}}_{p}\right) {\hat{h}}_{p}$ (8)

***U̅**ₚ* is a matrix formed by first $\frac{P}{2}$ columns of ***U̅**,* and ⊗ represents a Kronecker product. When a CSI feedback scheme is designed, quantization feedback may be performed on ***U̅**ₚ* in a long periodicity, and quantization feedback may be performed on ***ĥₚ*** in a short periodicity or an aperiodic manner. For example, a specific CSI compression and reporting scheme includes the following steps. S1: UE performs spatial-frequency joint covariance matrix statistics on a downlink channel, and performs inter-polarization average to obtain ***R̅ₕ*;** and performs singular value decomposition (singular value decomposition, SVD) or eigen decomposition on ***R̅ₕ*** to obtain a matrix ***U̅*** formed by eigenvectors. The UE truncates the matrix ***U̅**,* and selects $\frac{P}{2}$ columns corresponding to $\frac{P}{2}$ eigenvalues with largest energy to form the matrix ***U̅**ₚ,* and ***U̅**ₚ* includes an overwhelming majority of energy of the channel (selection of P may be determined by the UE, or the gNB specifies an optional range and then the UE performs selection).

S2: The UE approximates, based on the DFT codebook, the matrix ***U̅**ₚ* formed by the statistical eigenvectors, that is, searches for ***W**_{f} , **W**ₛ*, and ***C***₁, so that ${\overline{U}}_{p} \approx \left({W}_{f}^{∗}⊗{W}_{s}\right) {C}_{1} = {W}_{1} {C}_{1}$ or ${\overline{U}}_{p} \approx \left({W}_{f}^{∗}⊙{W}_{s}\right) {C}_{1} = {W}_{1} {C}_{1}$ ***W**_{f}* and ***W**ₛ* are submatrices formed by some columns of an oversampled DFT matrix, and respectively represent beam/basis vectors in frequency domain and spatial domain; ***C̅***₁ is a projection of ***U̅**ₚ* on the quantization matrix ***W***₁, and ***W***₁ may be corrected to the statistical characteristic matrix ***U**ₚ.* In this step, ***W**_{f}, **W**ₛ*, and ***C̅*₁** obtained through computation are reported to the base station in long periodicities (optionally, the "long periodicity" is used to distinguish from a "short periodicity" in the following description, and does not necessarily mean that these matrices are reported in the same periodicity, because time change scales of the matrices may be different, for example, a rate at which ***C̅*₁** changes over time is likely to be faster than that of ***W**_{f}* and ***W**ₛ*, and different feedback periodicity granularities may be used).

S3: The UE computes, based on the instantaneous channel ***h*** and ***W***₁***C***₁ obtained in S2, a codebook ***C*₂** that needs to be fed back, where ***C*₂** may be a projection of the instantaneous channel ***h*** on ***W*₁*C*₁***,* that is, ***C*₂** = (***W*₁C*₁***)*^{H}**h***; or ***C*₂** may be obtained through computation in another form (for example, when columns of ***W***₁***C***₁ are not orthogonal, ***W***₁***C***₁ needs to be orthogonalized). The UE feeds back ***C*₂** to the base station in the short periodicity or an aperiodic manner for downlink channel reconstruction.

The foregoing CSI compression and reporting scheme is mapped to a codebook form, and formula (9) is satisfied: $W = \left({I}_{2}⊗\left(\left({W}_{f}^{∗}⊙{W}_{s}\right){C}_{1}\right)\right) {C}_{2}$ (9)

⊙ represents a KR (Khatri-Rao) product. For example, FIG. 7 is a diagram of matrix decomposition of a spatial-frequency joint channel ***h**.* In FIG. 7, ***h*** is a spatial-frequency joint channel, *M* is a quantity of base station antennas (dual-polarized arrays), and *N* is a quantity of frequency units (at a subcarrier granularity, an RB granularity, an RBG granularity, or a subband granularity). ***W**_{f}, **W**ₛ*, and ***C̅*₁** are used to approximate **U̅***ₚ* through quantization, and therefore, *2K* ≥ *P* is satisfied, where K is a quantity of columns of the matrix ***W**ₛ.* ${W}_{f}^{∗} ⊙ {W}_{s}$ is a DFT basis for quantizing a spatial-frequency joint basis.

### Case 2: Spatial-frequency independent compression and feedback

A downlink channel is used as an example. It is assumed that a terminal has a single antenna, and a matrix of the channel of the terminal satisfies formula (10): $H \approx S ′ {C}_{1} {C}_{2} {C}_{3} F {′}^{H}$ (10) $S ′ ∈ {ℂ}^{2 M \times B}$ is a spatial domain basis, and is a matrix formed by *B* spatial domain vectors; and $F ′ ∈ {ℂ}^{N \times F}$ is a frequency domain basis, and is a matrix formed by *F* frequency domain vectors. ${C}_{1} ∈ {ℂ}^{B \times {K}_{S}}$ is a first superposition coefficient matrix, representing a coefficient matrix formed by a plurality of groups of spatial domain vector coefficients; ${C}_{2} ∈ {ℂ}^{{K}_{S} \times D}$ is a second superposition coefficient matrix, representing a coefficient matrix formed by weighting coefficients corresponding to a group of spatial-frequency vectors formed by each of the *B* spatial domain vectors and each of the *F* frequency domain vectors; and ${C}_{3} ∈ {ℂ}^{D \times F}$ is a third superposition coefficient matrix, representing a matrix formed by a plurality of groups of frequency domain vector coefficients. *B* is the quantity of spatial domain vectors determined by the network device or the terminal; *K_{S}* represents a quantity of weighting coefficients corresponding to each spatial domain vector; *D* represents a quantity of weighting coefficients corresponding to each frequency domain vector; and *F* is the quantity of frequency domain vectors determined by the network device or the terminal.

Optionally, the spatial domain vector (spatial domain vector) may also be referred to as a beam vector, a spatial domain beam basis vector (spatial beam basis vector), or a spatial domain basis vector. A length of the spatial domain vector may be a quantity *M* of transmit antenna ports in a polarization direction, and *M* is a positive integer greater than 1. For example, if the spatial domain vector is a column vector or a row vector whose length is *M,* the *M* column vectors or row vectors respectively correspond to *M* transmit antenna ports. This is not limited in this application. Elements in the spatial domain vector may represent weights of antenna ports. Signals of the antenna ports are linearly superposed based on the weights of the antenna ports represented by the elements in the spatial domain vector, so that an area with strong signals can be formed spatially in a specific direction or some directions. Optionally, the spatial domain vector may be determined based on a DFT vector. In other words, the spatial domain vector may be a DFT vector. The spatial domain vector may be, for example, a DFT vector defined in a type II (type II) codebook in the 3^{rd} generation partnership project (3^{rd} generation partnership project, 3GPP) technical specification TS 38.214 release 15 (release 15, R15).

Optionally, the frequency domain vector (frequency domain vector) may also be referred to as a frequency domain basis vector, and is a vector representing a change rule of a channel in frequency domain. One frequency domain vector may represent one change rule. When a signal is transmitted through a radio channel, the signal may arrive at a receive antenna through a plurality of paths from a transmit antenna. Frequency selective fading caused by a multipath delay is a change of a frequency domain channel. Therefore, change rules of channels in frequency domain that are caused by delays on different transmission paths may be represented by using different frequency-domain vectors. A length of the frequency domain vector may be determined by a quantity of to-be-reported frequency domain units that are configured on the network side in a reporting bandwidth, or may be a value predefined in a protocol. The length of the frequency domain vector is not limited in this application. The reporting bandwidth may be, for example, indicated by a CSI reporting bandwidth (CSI-Reporting Band) carried in a CSI reporting configuration in higher layer signaling (for example, an RRC message). A length of the frequency domain vector may be denoted as *N*, where *N* is a positive integer greater than 1. The frequency domain vector may be, for example, a column vector or a row vector whose length includes *N*. This is not limited in this application.

Optionally, the spatial-frequency joint basis may represent common characteristics in spatial domain and frequency domain. For example, the spatial-frequency joint basis is a matrix constructed by one or more spatial-frequency domain basis vectors. The spatial-frequency domain basis vector may represent a change rule of a channel in frequency domain and signal characteristics in a direction or some directions in a space. For example, refer to the foregoing descriptions of characteristics of the spatial domain vector and the frequency domain vector. Details are not described herein again.

Corresponding to the channel decomposition manner shown in formula (10), mapping to the codebook form satisfies formula (11): $W = {W}_{S} {C}_{1} {C}_{2} {C}_{3} {W}_{f}^{H}$ (11) ${W}_{S} ∈ {ℂ}^{2 M \times B}$ is a spatial domain basis of the downlink channel determined by the network device or the terminal, and ${W}_{f} ∈ {ℂ}^{N \times F}$ is a frequency domain basis of the downlink channel determined by the network device or the terminal. A computation manner of ***W**_{S}* satisfies formula (12) and formula (13): ${R}_{S} = E \left\{H{H}^{H}\right\} = {U}_{S} {Λ}_{S} {U}_{S}^{H}$ (12) ${U}_{S} = {W}_{S} {C}_{1}$ (13) ${R}_{S} ∈ {ℂ}^{2 M \times 2 M}$ is a spatial domain statistical covariance matrix of ***H**,* ${U}_{S} ∈ {ℂ}^{2 M \times {K}_{S}}$ is a matrix formed by eigenvectors of ***R**_{S}*, eigenvalues corresponding to each column of ***U**_{S}* are elements on a diagonal of the diagonal matrix ${Λ}_{S} ∈ {ℂ}^{{K}_{S} \times {K}_{S}}$, the elements on the diagonal of ***Λ**_{S}* are arranged in descending order, and IE represents computation of an expectation for a random number/matrix. A computation manner of ***W_{f}*** satisfies formula (14) and formula (15): ${R}_{F} = E \left\{{H}^{H}H\right\} = {U}_{F} {Λ}_{F} {U}_{F}^{H}$ (14) ${U}_{F} = {W}_{f} {C}_{3}^{H}$ (15) ${R}_{F} ∈ {ℂ}^{N \times N}$ is a frequency domain statistical covariance matrix of ***H**,* ${U}_{F} ∈ {ℂ}^{N \times D}$ is a matrix formed by eigenvectors of ***R**_{F}*, eigenvalues corresponding to each column of ***U_{F}*** are elements on a diagonal of the diagonal matrix ${Λ}_{F} ∈ {ℂ}^{D \times D}$, and the elements on the diagonal of ***Λ**_{F}* are arranged in descending order.

For example, FIG. 8 is a schematic flowchart of spatial-frequency joint codebook feedback combining long and short periodicities. For example, it is assumed that the configuration of the base station includes 64T dual-polarized antennas, 50 RBs, 64 DFT column vectors are used to approximate **U***ₚ,* **U̅***ₚ* has 13 columns, ${W}_{1} ∈ {ℂ}^{1600 \times 64} , {C}_{1} ∈ {ℂ}^{64 \times 13}$, long-periodicity feedback of ***W***₁***C***₁ is performed, with a periodicity of *T_{L},* and short-periodicity feedback of ***C***₂ is performed, with a periodicity of *T_{S}*. Each time when the long-periodicity basis feedback is performed, when a feedback amount required for ***W***₁ is ignored, 64 × 13 = 832 coefficients forming *C̅*₁ need to be fed back. It can be learned that, overheads of the spatial-frequency joint codebook feedback combining long and short periodicities are high. In addition, the base station further needs to configure 32-port CSI-RSs to measure channel information, and pilot overheads are high. As the quantity of antennas increases, frequency bands rise, and pilot overheads sharply increase.

In a massive MIMO contiguous networking scenario, inter-cell interference is severe. If an original downlink channel reconstruction technology is still used to obtain CSI, the obtained CSI may include interference information, affecting precoding performance. Therefore, an interference channel needs to be measured. During measurement of the interference channel, a network device causing interference to a terminal device (referred to as an interfering station) sends a pilot signal to the terminal device; the terminal device measures the pilot signal; and the terminal device feeds back state information of the interference channel to a network device serving the terminal device (referred to as a serving station).

However, measuring the interference channel increases reference signal resource overheads and long-periodicity basis feedback overheads. In addition, a large amount of interference channel information needs to be exchanged between the serving station and the interfering station, resulting in a larger interaction delay.

To resolve the foregoing problem, this application provides a plurality of communication methods. A region-level channel basis provided by a channel map is used as prior information (which may be a spatial-frequency joint basis ***U̅**,* or a spatial domain basis ***U_{S}*** and a frequency domain basis ***U**_{F}*, or may be a spatial domain compression matrix ***W**_{S}* and a frequency domain compression matrix ***W**_{f}*, which is not limited in this application), and the spatial-frequency joint basis ***U*** of the interfering station and a sparse CSI-RS are delivered to UE. After receiving the sparse CSI-RS sent by the interfering station, the UE computes a superposition coefficient ***C***₂ and performs feedback, and updates and feeds back a column index value of the spatial-frequency joint basis, to reduce overheads of resources exchanged between devices in an interference channel measurement process and reduce a delay of inter-station interaction.

It should be understood that descriptions of specific scenarios in embodiments of this application are merely examples. In addition to the foregoing described application scenarios, the method provided in embodiments of this application is also applicable to an application scenario in which a similar problem exists.

The following describes in detail a plurality of communication methods provided in embodiments of this application with reference to the accompanying drawings.

It should be understood that step numbers in embodiments of this application are merely used for description, and do not limit a sequence of steps.

For ease of understanding and description, the following describes the communication method in embodiments of this application by using interaction between a terminal device and a network device as an example. However, this shall not constitute any limitation on an execution body of the communication method in embodiments of this application. For example, the method performed by the terminal device may alternatively be performed by a module (for example, a circuit, a chip, or a chip system) of the terminal device, or may be implemented by a logical node, a logical module, or software that can implement all or a part of functions of the terminal device. The method performed by the network device may alternatively be performed by a module (for example, a circuit, a chip, or a chip system) of the network device, or may be implemented by a logical node, a logical module, or software that can implement all or a part of functions of the network device.

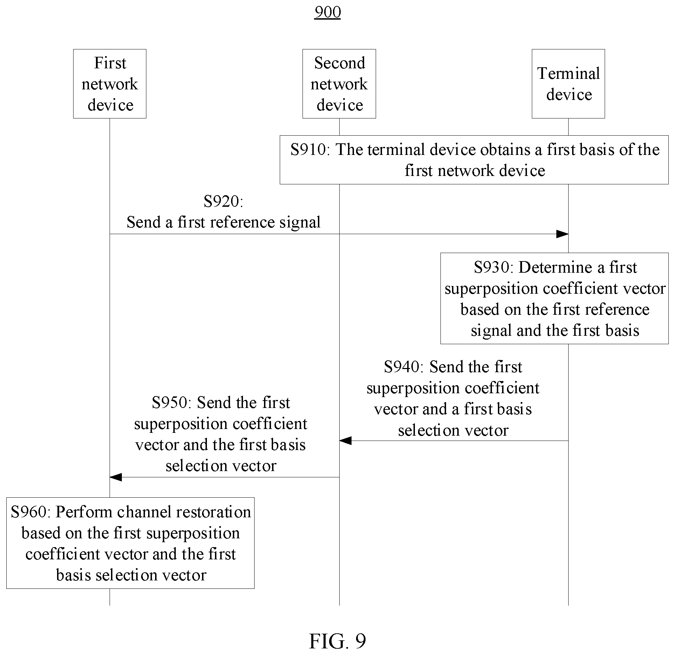

FIG. 9 is a communication method 900 according to this application. The method 900 includes at least some methods shown in FIG. 9.

S910: A terminal device obtains a first basis, where the first basis is a channel basis of a first network device (optionally, the first network device may be an interfering station of the terminal device), the first basis is formed by L columns of basis vectors, and L is a positive integer.

Optionally, that the terminal device obtains the first basis includes: The terminal device receives the first basis sent by a second network device (optionally, the first network device may be a serving station of the terminal device). Correspondingly, the second network device sends the first basis to the terminal device.

It should be noted that the first basis in this application is a region-level channel basis (prior information) provided by a channel map. Based on the channel map, the second network device may obtain a channel basis without a quantization loss of the first network device, and send the channel basis without the quantization loss to the terminal device, which helps improve CSI reconstruction precision.

In a possible implementation, that the second network device sends the first basis to the terminal device may be understood as: The second network device sends indication information of the first basis to the terminal device, where the indication information of the first basis indicates a projection coefficient of the first basis on a quantization basis of the first basis and a column index of the quantization basis of the first basis, the first basis is formed by L columns of basis vectors, and L is a positive integer. For example, the quantization basis of the first basis is any one of a DFT codebook, a fast Fourier transform (fast Fourier transform, FFT) codebook, an oversampled DFT codebook, an oversampled FFT codebook, or a codebook determined based on a preset rule. This is not limited in this application.

The basis vector is determined based on the quantization basis. For example, the basis vector is any one of a DFT basis vector (the DFT basis vector is a vector determined based on the DFT codebook), an FFT basis vector (the FFT basis vector is a vector determined based on the FFT codebook), an oversampled DFT basis vector (the oversampled DFT basis vector is a vector determined based on the oversampled DFT codebook), an oversampled FFT basis vector (the oversampled FFT basis vector is a vector determined based on the oversampled FFT codebook), or a vector determined based on a preset rule. It is assumed that one or more basis vectors are one or more DFT basis vectors, the first basis is a matrix formed by L columns of DFT basis vectors selected from the one or more DFT basis vectors (that is, elements in the first basis satisfy the preset rule and have related characteristics).

The column index of the quantization basis of the first basis includes an index of the basis vector forming the first basis. For example, it is assumed that the first basis is obtained by performing quantization projection on the quantization basis of the first basis. For example, the quantization basis of the first basis may be a DFT codebook, and the first basis is obtained by performing quantization projection on the DFT codebook. However, a plurality of DFT basis vectors may be sequentially arranged in the DFT codebook. It is assumed that a 1^{st} DFT basis vector, a 3^{rd} DFT basis vector, and a 5^{th} DFT basis vector are selected to construct the first basis. In this case, column indexes of the quantization basis of the first basis are {1, 3, 5}.

Optionally, the first basis is a spatial-frequency joint basis, or a spatial domain basis and a frequency domain basis. For example, it is assumed that the first basis is a spatial-frequency joint basis U, and the quantization basis of the first basis is the DFT codebook. In this case, the indication information of the first basis indicates a projection coefficient of the spatial-frequency joint basis U on the DFT codebook and a column index of the DFT codebook. It should be noted that the basis in this application may also be referred to as a codebook. For example, the first basis may also be referred to as a first codebook, a second basis may also be referred to as a second codebook, and the like. This is not limited in this application.

Optionally, a specific implementation of the indication information of the first basis includes the following cases.
(1) Case 1: The indication information of the first basis includes the first basis. That is, the second network device directly sends the first basis of the first network device to the terminal device. For example, it is assumed that the first basis is a spatial-frequency joint basis ***U̅**,* the second network device sends the spatial-frequency joint basis $U ∈ {ℂ}^{MN \times L}$ corresponding to the terminal device to the terminal device through a PDCCH/PDSCH, where *M* is a quantity of antennas of the first network device, *L* is a quantity of paths, and *N* is a quantity of frequency units (for example, the frequency unit is a subcarrier, an RB, an RBG, or a subband). It should be noted that a value in the first basis may be a complex number, and amplitude and phase quantization processing needs to be performed on the complex number value. The second network device may obtain and send the first basis obtained through amplitude and phase quantization processing.
(2) Case 2: The indication information of the first basis includes a projection coefficient of the first basis on a quantization basis of the first basis and a column index of the quantization basis of the first basis. That is, the second network device indirectly indicates the first basis to the terminal device. For example, it is assumed that the first basis is a spatial-frequency joint basis ***U*** , the second network device may perform quantization processing on the spatial-frequency joint basis ***U*** by using the quantization basis ***B*** of the first basis constructed by one or more basis vectors. Quantization processing satisfies formula (16): $U = B \times {C}_{13}$ (16)

***B*** represents the quantization basis of the first basis, ***C*₁₃** represents the projection coefficient of the first basis on the quantization basis of the first basis, and a function of ***C̅***₁₃ is similar to that of the foregoing coefficient ***W***₁***C***₁. Therefore, the indication information of the first basis includes the column index (indicating a basis vector used for quantizing the spatial-frequency joint basis ***U***) of the quantization basis of the first basis and ***C***₁₃. For another example, it is assumed that the first basis is a spatial domain basis ***U_{S}*** and a frequency domain basis ***U**_{F}*, refer to the descriptions of the spatial-frequency independent compression and feedback procedure described in the first part above. For example, the spatial domain basis ***U_{S}*** satisfies formula (13), and quantization processing is performed by using ***W**_{S}*; and the frequency domain basis ***U**_{F}* satisfies formula (15), and quantization processing is performed by using ***W**_{f}*.

Optionally, the second network device may send the projection coefficient of the first basis on the quantization basis of the first basis and the column index of the quantization basis of the first basis to the terminal device through the PDCCH/PDSCH. Correspondingly, the terminal device receives the projection coefficient of the first basis on the quantization basis of the first basis and the column index of the quantization basis of the first basis, so that the spatial-frequency joint basis ***U*** can be restored based on the quantization basis ***B*** of the first basis. Optionally, the quantization basis ***B*** of the first basis is known to and identical for both the terminal device and the second network device. For example, the quantization basis ***B*** of the first basis may be a DFT codebook. Optionally, indication overheads in case 2 are lower than indication overheads in case 1, but the quantization basis ***B*** of the first basis needs to be preset (for example, pre-stored) on both the terminal device side and the second network device side.

Optionally, before S910, the method further includes the following steps.

The second network device sends a channel map request message to a core network device, where the channel map request message is used for requesting to obtain a first channel map of the first network device, thereby obtaining the first basis of the first network device corresponding to the terminal device.

For example, the channel map is shown in FIG. 3. When the terminal device moves to any grid in the channel map, the second network device may trigger a channel map request message, to request to obtain a first channel map of the first network device corresponding to the terminal device. The first channel map includes the first basis of the first network device corresponding to the terminal device. For example, the second network device may determine that the spatial-frequency joint basis is the first basis based on path angle-delay information of the channel map.

Optionally, if the core network device is, for example, an AMF, the second network device sends the first request message to the AMF. The AMF is equivalent to a router for communication between the second network device and the LMF/MMF, and the second network device requests the LMF/MMF to obtain the channel map via the AMF. Correspondingly, the LMF/MMF may send the channel map to the second network device via the AMF. Therefore, after obtaining the first channel map, the second network device may determine the first basis based on the first channel map.

S920: The first network device sends a first reference signal to the terminal device.

The first reference signal is used for measuring interference channel information of the first network device, and may be specifically a downlink reference signal. The downlink reference signal may include a CSI-RS, a synchronization signal/physical broadcast channel block (synchronization signal/physical broadcast channel block, SSB), a demodulation reference signal (demodulation reference signal, DMRS), or the like.

Optionally, density of the first reference signal is positively correlated with a quantity of columns of the first basis. Specifically, the density *ρ* of the first reference signal is in direct proportion to the quantity *L* of columns of the first basis, for example, a smaller value of *L* indicates a smaller value of *ρ*. It may be understood that, a smaller quantity *L* of columns of the first basis indicates a smaller quantity of channel multipaths, and therefore values for which channel measurement needs to be performed are fewer. Correspondingly, fewer reference signals need to be sent. Therefore, the density *ρ* of the first reference signal is in direct proportion to the quantity *L* of columns of the first basis. For example, it is assumed that the first basis is a spatial-frequency joint basis ***U**,* and the spatial-frequency joint basis $U ∈ {ℂ}^{MN \times L}$ corresponding to the terminal device is known, where *M* is a quantity of antennas of the first network device, *L* is a quantity of channel multipaths, and *N* is a quantity of frequency units. The first network device sets the density *ρ* of the first reference signal based on a quantity *L* of columns of the spatial-frequency joint basis ***U**,* and may reduce a frequency domain granularity from *N* to *N*₁, thereby reducing reference signal overheads.

S930: The terminal device determines a first superposition coefficient vector based on the first reference signal and the first basis.

Specifically, that the terminal device determines the first superposition coefficient vector based on the first reference signal and the first basis includes:
First, the terminal device determines a second channel matrix based on the first reference signal, determines a second superposition coefficient vector based on the second channel matrix and the second basis, and then determines the first superposition coefficient vector based on the second superposition coefficient vector.

The second basis is constructed in a row that is in the first basis and that corresponds to a position index of the first reference signal in spatial-frequency domain, the second channel matrix is channel state information of the first reference signal in a corresponding spatial domain dimension, a dimension of the second channel matrix is MN₁×1, a dimension of the second basis is MN₁×1, M is a quantity of antenna ports for receiving the first reference signal, N is a quantity of frequency domain units for carrying the first reference signal, the first superposition coefficient vector includes K superposition coefficients, the second superposition coefficient vector includes L superposition coefficients, the K superposition coefficients are K elements with largest amplitudes in the second superposition coefficient vector, a dimension of the second superposition coefficient vector is L×1, M and N₁ are positive integers, K is a positive integer less than or equal to L, and L is less than or equal to MN₁.

For example, it is assumed that the first reference signal is a CSI-RS signal. The terminal device performs channel estimation on the CSI-RS signal, to obtain the second channel matrix ***h**ₛ* in the spatial domain dimension. A dimension of the second channel matrix is MN₁×1. For example, ***h**ₛ*. satisfies ${h}_{S} ∈ {ℂ}^{{MN}_{1} \times 1}$, where *M* is a spatial domain granularity (for example, a quantity of antennas) of the first reference signal, and *N*₁ is a frequency domain granularity (for example, a quantity of subcarriers, a quantity of RBs, a quantity of RBGs, or a quantity of subbands) of the first reference signal.

The second basis constructed in the row that is in the first basis and that corresponds to the position index of the first reference signal in spatial-frequency domain is represented as *Uₛ*. A dimension of the second basis is MN₁×L, for example, ***U**_{S}* satisfies ${U}_{S} ∈ {ℂ}^{{MN}_{1} \times L}$. For example, the terminal device receives the first reference signal, and may determine position indexes of the first reference signal in spatial-frequency domain; and obtains a row corresponding to the position indexes from the first basis based on the position indexes (*M* and *N*₁) of the first reference signal in spatial-frequency domain, to form the second basis ***U**_{S}*.

The second superposition coefficient vector is determined based on the second channel matrix and the second basis constructed in the row that is in the first basis and that corresponds to the position index of the first reference signal in spatial-frequency domain, and satisfies formula (17): $c = pinv \left({U}_{S}\right) \times {h}_{S}$ (17) ***c*** is the second superposition coefficient vector, ***h**ₛ* is the second channel matrix, ***U**_{S}* is the second basis, and pinv(***A***) represents a pseudo-inverse of the matrix ***A***. Optionally, formula (17) is merely an example, and the second superposition coefficient vector may alternatively satisfy a variation based on formula (17), or satisfy another generation manner based on ***h**ₛ* and ***U**ₛ*. This is not limited in this application. The second superposition coefficient vector includes L superposition coefficients, a dimension of the second superposition coefficient vector is L×1, and L is a positive integer. For example, ***c*** satisfies $c ∈ {ℂ}^{L \times 1}$. Optionally, the superposition coefficient vector represents a projection coefficient of the channel matrix on the basis.

After the second superposition coefficient vector is determined by using the foregoing method, the first superposition coefficient vector may be determined based on the second superposition coefficient vector.

Specifically, the first superposition coefficient vector includes K superposition coefficients, and the K superposition coefficients are K elements with largest amplitudes in the second superposition coefficient vector. K is a positive integer less than or equal to L. For example, it is known that the second superposition coefficient vector includes L superposition coefficients. It is assumed that K elements with largest amplitudes in the L superposition coefficients form the first superposition coefficient vector ***c'**,* where ***c***' satisfies $c ′ ∈ {ℂ}^{K \times 1}$, and *K* satisfies 0 < *K* ≤ *L*.

It should be understood that the K elements with the largest amplitudes in the L superposition coefficients satisfy that the *K* coefficients are greater than *L* - *K* superposition coefficients other than the *K* coefficients in the L superposition coefficients. For example, it is assumed that the L superposition coefficients are 1, 3, 4, 6, 2, and 5, and L=6; and it is assumed that K=3, and the K elements with the largest amplitudes among all elements in the L superposition coefficients include 4, 5, and 6, that is, the second superposition coefficient vector includes three elements, which are respectively 4, 5, and 6.

S940: The terminal device sends the first superposition coefficient vector and the first basis selection vector to the second network device.

The first superposition coefficient vector, the first basis selection vector, and the first basis jointly represent a first channel matrix of the first network device.

The first basis selection vector includes position indexes of the K superposition coefficients in the second superposition coefficient vector, and the position indexes correspond to column indexes of the first basis. For example, it is assumed that the L superposition coefficients are 1, 3, 4, 6, 2, and 5, and L=6; and it is assumed that K=3, and the first superposition coefficient vector includes three superposition coefficients, which are 4, 5, and 6 respectively. Position indexes of the three superposition coefficients in the second superposition coefficient vector are respectively 3, 6, and 4, that is, the first basis selection vector includes three elements, which are respectively 3, 4, and 6.

Optionally, that the terminal device sends the first superposition coefficient vector and the first basis selection vector may be, for example, that the terminal device sends the first superposition coefficient vector and the first basis selection vector to the second network device through a PUCCH/PUSCH. Optionally, the terminal device may report the first superposition coefficient vector in a short periodicity, and the terminal device may report the first basis selection vector in a short periodicity or a long periodicity. This is not limited in this application.

It can be learned that the terminal device needs to feed back only the K superposition coefficients (similar to the short-periodicity superposition coefficients shown in FIG. 8) and the position indexes (indicating position indexes in the first basis) of the K superposition coefficients in the second superposition coefficient vector, which helps reduce feedback overheads from the terminal device to the second network device.

S950: The second network device sends the first superposition coefficient vector and the first basis selection vector to the first network device.

S960: The first network device performs channel restoration based on the first superposition coefficient vector and the first basis selection vector.

First, the first network device obtains the first basis. For example, the first network device sends a channel map request message to the core network device, where the channel map request message is used for requesting to obtain a first channel map of the first network device, thereby obtaining the first basis of the first network device corresponding to the terminal device.

That the first network device performs channel restoration includes: The first network device determines the first channel matrix based on the first superposition coefficient vector, the first basis selection vector, and the first basis.

Specifically, the first channel matrix may be obtained by multiplying the first superposition coefficient vector by a third basis, where the third basis is formed by columns that are in the first basis and that correspond to K position indexes in the first basis selection vector, which satisfies formula (18): ${h}_{I} = {U}_{I} \times c ′$ (18) ***h_{I}*** is the first channel matrix, and ***U_{I}*** is the third basis.

Optionally, the method in this application further includes the following steps S970 to S991. S970: The first network device sends a second reference signal to the terminal device, and the second network device sends a third reference signal to the terminal device.

Time domain resources, frequency domain resources, and pilot sequences of the second reference signal and the third reference signal are the same.

It should be understood that the second reference signal and the third reference signal are used for measuring a channel matrix from the second network device to the terminal device, and may be specifically downlink reference signals. The downlink reference signal may include a CSI-RS, a synchronization signal/physical broadcast channel block (synchronization signal/physical broadcast channel block, SSB), a demodulation reference signal (demodulation reference signal, DMRS), or the like.

S980: The terminal device determines a third superposition coefficient vector based on the second reference signal, the third reference signal, and a fourth basis, where the fourth basis is a channel basis of the second network device, the fourth basis is formed by R columns of basis vectors, and R is a positive integer.

Before this step or in a process of this step, the terminal device needs to obtain the fourth basis, for example, receive the fourth basis sent by the second network device. For details, refer to a manner in which the terminal device obtains the third basis in S910.

First, the terminal device determines a third channel matrix based on the second reference signal and the third reference signal, where the third channel matrix is a sum of a fourth channel matrix of the first network device and a first channel matrix of the second network device; and then determines a fourth channel matrix of the second network device based on the first channel matrix and the third channel matrix, where the fourth channel matrix represents a channel matrix from the second network device to the terminal device; and then determines a third superposition coefficient vector based on the fourth channel matrix and the fourth basis, where the third superposition coefficient vector includes Q superposition coefficients, and Q is a positive integer less than or equal to R.

The first channel matrix, the third channel matrix, and the fourth channel matrix satisfy formula (19): ${h}_{C} = {h}_{U} - {h}_{I}$

***h**_{C}* is the fourth channel matrix, and ***h**_{U}* is the third channel matrix.

S990: The terminal device sends the third superposition coefficient vector and a second basis selection vector to the second network device.

The third superposition coefficient vector, the second basis selection vector, and the fourth basis jointly represent the fourth channel matrix of the second network device.

The second basis selection vector includes column indexes that are in the fourth basis and that correspond to the Q superposition coefficients.

S991: The second network device performs channel restoration based on the third superposition coefficient vector, the second basis selection vector, and the fourth basis.

Specifically, the second network device determines the fourth channel matrix based on the third superposition coefficient vector, the second basis selection vector, and the fourth basis.

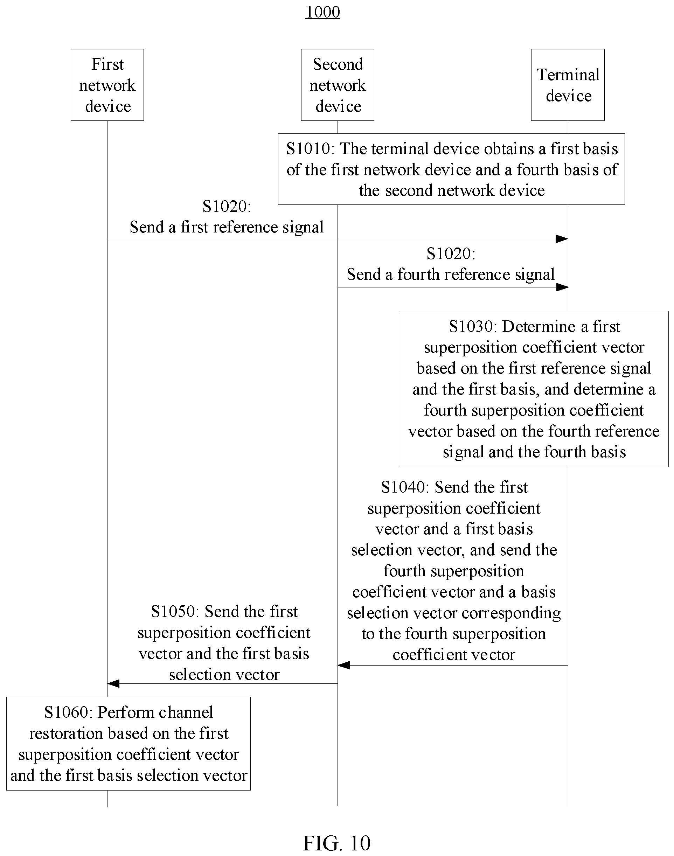

FIG. 10 is another communication method 1000 according to this application. The method 1000 includes at least some methods shown in FIG. 10.

S1010: A terminal device obtains a first basis and a fourth basis, where the first basis is a channel basis of a first network device (optionally, the first network device may be an interfering station of the terminal device), the fourth basis is a channel basis of a second network device (optionally, the first network device may be a serving station of the terminal device), the first basis is formed by L columns of basis vectors, L is a positive integer, the fourth basis includes R columns of basis vectors, and R is a positive integer.

Optionally, for a method of obtaining the first basis and the fourth basis by the terminal device, refer to steps S910 and S980.

S1020: The first network device sends a first reference signal to the terminal device, and the second network device sends a fourth reference signal to the terminal device.

The first reference signal is used for measuring interference channel information of the first network device, and the fourth reference signal is used for measuring a channel matrix from the second network device to the terminal device. The first reference signal and the fourth reference signal are orthogonal and sparse reference signals. The orthogonal reference signal indicates that frequency domain resources of the first reference signal and the fourth reference signal are staggered, or sequences of the first reference signal and the fourth reference signal are orthogonal. The first reference signal and the fourth reference signal may be specifically downlink reference signals. The downlink reference signal may include a CSI-RS, a synchronization signal/physical broadcast channel block (synchronization signal/physical broadcast channel block, SSB), a demodulation reference signal (demodulation reference signal, DMRS), or the like.

Optionally, density of the first reference signal and the fourth reference signal is positively correlated with a quantity of columns of the first basis. Specifically, the density *ρ* of the first reference signal and the fourth reference signal is in direct proportion to the quantity *L* of columns of the first basis, for example, a smaller value of *L* indicates a smaller value of *ρ*. It may be understood that, a smaller quantity *L* of columns of the first basis indicates a smaller quantity of channel multipaths, and therefore values for which channel measurement needs to be performed are fewer. Correspondingly, fewer reference signals need to be sent. Therefore, the density *ρ* of the first reference signal is in direct proportion to the quantity *L* of columns of the first basis. For example, it is assumed that the first basis is a spatial-frequency joint basis ***U**,* and the spatial-frequency joint basis $U ∈ {ℂ}^{MN \times L}$ corresponding to the terminal device is known, where *M* is a quantity of antennas of the first network device, *L* is a quantity of channel multipaths, and *N* is a quantity of frequency units. The first network device sets the density *ρ*, of the first reference signal based on a quantity *L* of columns of the spatial-frequency joint basis ***U*** , and may reduce a frequency domain granularity from *N* to *N*₁ , thereby reducing reference signal overheads. Similarly, the second network device may set the density of the fourth reference signal based on a quantity of columns of the fourth basis.

S1030: The terminal device determines a first superposition coefficient vector based on the first reference signal and the first basis, and/or the terminal device determines a fourth superposition coefficient vector based on the fourth reference signal and the fourth basis.

Specifically, for a manner in which the terminal device determines the first superposition coefficient vector based on the first reference signal and the first basis, refer to step S930.

For a manner in which the terminal device determines the fourth superposition coefficient vector based on the fourth reference signal and the fourth basis, refer to step S930 (replace the first basis in step S930 with the fourth basis, and replace the first superposition coefficient vector with the fourth superposition coefficient vector).

S1040: The terminal device sends the first superposition coefficient vector and the first basis selection vector to the second network device, and/or the terminal device sends the fourth superposition coefficient vector and a basis selection vector corresponding to the fourth superposition coefficient vector to the second network device.

The first superposition coefficient vector, the first basis selection vector, and the first basis jointly represent a first channel matrix of the first network device, and the first channel matrix represents channel information of the first network device.

The fourth superposition coefficient vector, the basis selection vector corresponding to the fourth superposition coefficient vector, and the fourth basis jointly represent a fifth channel matrix of the second network device, and the fifth channel matrix represents channel information of the second network device.

It should be understood that for a specific reporting manner, refer to step S940.

S1050: The second network device sends the first superposition coefficient vector and the first basis selection vector to the first network device.

S1060: The first network device performs channel restoration based on the first superposition coefficient vector and the first basis selection vector.

First, the first network device obtains the first basis. For example, the first network device sends a channel map request message to a core network device, where the channel map request message is used for requesting to obtain a first channel map of the first network device, thereby obtaining the first basis of the first network device corresponding to the terminal device.

That the first network device performs channel restoration includes: The first network device determines the first channel matrix based on the first superposition coefficient vector, the first basis selection vector, and the first basis.

Specifically, the first channel matrix may be obtained by multiplying the first superposition coefficient vector by a third basis, where the third basis is formed by columns that are in the first basis and that correspond to K position indexes in the first basis selection vector, which satisfies formula (18): ${h}_{I} = {U}_{I} \times {c}_{I}^{′}$ (18)

*h**_{I}*** is the first channel matrix, and ***U_{I}*** is the third basis.

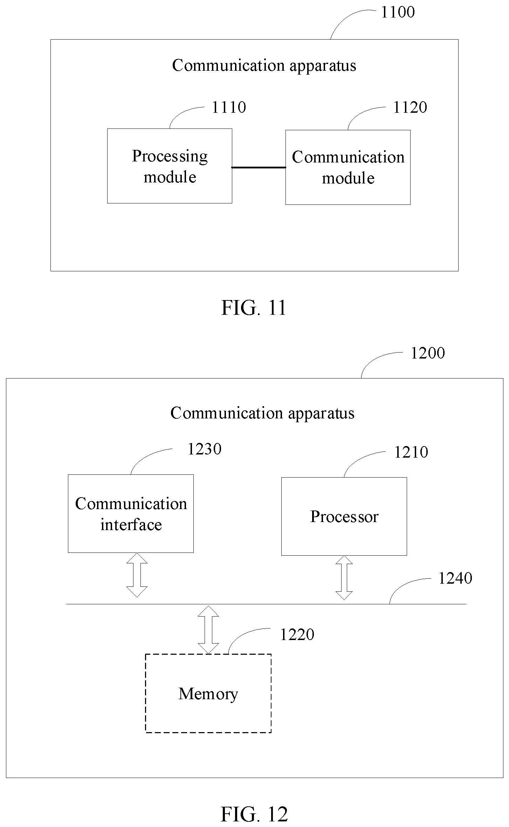

The foregoing describes in detail embodiments on a communication method side of this application with reference to FIG. 1 to FIG. 10. The following describes in detail embodiments on a communication apparatus side of this application with reference to FIG. 11 and FIG. 12. It should be understood that descriptions of the apparatus embodiments correspond to the descriptions of the method embodiments. Therefore, for a part that is not described in detail, refer to the foregoing method embodiments.

FIG. 11 is a diagram of a communication apparatus according to an embodiment of this application. As shown in FIG. 11, the communication apparatus 1100 includes a processing module 1110 and a communication module 1120. The communication apparatus 1100 may be a terminal device, or may be a communication apparatus that is applied to or used in conjunction with a terminal device and that can implement a method performed by the terminal device, for example, a chip, a chip system, or a circuit. Alternatively, the communication apparatus 1100 may be a network device, or may be a communication apparatus that is applied to or used in conjunction with a network device and that can implement a method performed by the network device, for example, a chip, a chip system, or a circuit.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in the foregoing methods. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit. When the communication apparatus 1100 is applied to the terminal device, the processing module 1110 may be configured to implement a processing function of the terminal device in the foregoing embodiments, and the communication module 1120 may be configured to implement a receiving/sending function of the terminal device in the foregoing embodiments.

When the communication apparatus 1100 is applied to the network device, the processing module 1110 may be configured to implement a processing function of the network device in the foregoing embodiments, and the communication module 1120 may be configured to implement a receiving/sending function of the terminal device in the foregoing embodiments.

In addition, it should be noted that the communication module and/or the processing module may be implemented via a virtual module. For example, the processing module may be implemented via a software functional unit or a virtual apparatus, and the communication module may be implemented via a software function or a virtual apparatus. Alternatively, the processing module or the communication module may be implemented via a physical apparatus. For example, if the apparatus is implemented through a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 12 is a diagram of another communication apparatus according to an embodiment of this application. As shown in FIG. 12, optionally, the communication apparatus 1200 may be a chip or a chip system. Optionally, the chip system in this application may include a chip, or may include a chip and another discrete component.

The communication apparatus 1200 may be configured to implement a function of any device (for example, a terminal device or a network device) in the communication system described in the foregoing examples. The communication apparatus 1200 may include at least one processor 1210. Optionally, the processor 1210 is coupled to a memory. The memory may be located in the apparatus. Alternatively, the memory may be integrated with the processor. Alternatively, the memory may be located outside the apparatus. For example, the communication apparatus 1200 may further include at least one memory 1220. The memory 1220 stores a necessary computer program, a computer program or instructions, and/or data for implementing any one of the foregoing examples. The processor 1210 may execute the computer program stored in the memory 1220, to complete the method in any one of the foregoing examples.

The communication apparatus 1200 may further include a communication interface 1230, and the communication apparatus 1200 may exchange information with another device through the communication interface 1230. For example, the communication interface 1230 may be a transceiver, a circuit, a bus, a module, a pin, or a communication interface of another type. When the communication apparatus 1200 is a chip-type apparatus or circuit, the communication interface 1230 in the apparatus 1200 may alternatively be an input/output circuit, and may input information (or referred to as receiving information) and output information (or referred to as sending information). The processor 1210 is an integrated processor, a microprocessor, an integrated circuit, a logic circuit, or the like. The processor may determine the output information based on the input information.

The coupling in this application may be an indirect coupling or a communication connection between apparatuses, units, or modules in an electrical form, a mechanical form, or another form, and is used for information exchange between the apparatuses, the units, or the modules. The processor 1210 may operate cooperatively with the memory 1220 and the communication interface 1230. A specific connection medium between the processor 1210, the memory 1220, and the communication interface 1230 is not limited in this application.

Optionally, as shown in FIG. 12, the processor 1210, the memory 1220, and the communication interface 1230 are connected to each other through a bus 1240. Optionally, the bus may include a type of bus such as an address bus, a data bus, or a control bus. In addition, for ease of representation, FIG. 12 shows one bus 1240, but this does not mean that there is only one bus or only one type of bus.

It should be understood that the processor mentioned in embodiments of this application may be the following device or a part of circuits configured for a processing function in the following device: a central processing unit (central processing unit, CPU) or another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor. It should further be noted that the memory described herein is intended to include, but is not limited to, these and any other appropriate type of memory.

An embodiment of this application further provides a computer-readable storage medium. The computer-readable storage medium stores computer instructions used to implement the methods performed by the terminal device and the network device in the foregoing method embodiments. An embodiment of this application further provides a computer program product, including instructions. When the instructions are executed by a computer, the methods performed by the terminal device and the network device in the foregoing method embodiments are implemented. An embodiment of this application further provides a communication system. The communication system includes the terminal device and the network device in the foregoing embodiments.

For explanations and beneficial effect of related content in any one of the apparatuses provided above, refer to the corresponding method embodiment provided above. Details are not described herein again.

For ease of understanding the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.
(3) Ordinal numbers such as "first" and "second" in embodiments of this application are intended to distinguish between a plurality of objects, but are not intended to limit sizes, content, an order, a time sequence, priorities, importance, or the like of the plurality of objects. For example, first indication information and second indication information may be same information, or may be different information. In addition, such names do not indicate that content, sizes, application scenarios, transmit ends/receive ends, priorities, importance degrees, or the like of the two pieces of information are different. In addition, step numbers in embodiments described in this application are merely intended to distinguish between different steps, but are not intended to limit a sequence of the steps.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "indication" or "for indicating" may include "directly indicate" and "indirectly indicate". When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. An example sending method is not limited in embodiments of this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) The "protocol" in this application may be a standard protocol in the communication field, for example, may include a 4^{th} generation (4^{th} generation, 4G) network protocol, a 5^{th} generation (5^{th} generation, 5G) network protocol, an NR protocol, a 5.5G network protocol, a 6^{th} generation (6^{th} generation, 6G) network protocol, and a related protocol applied to a future communication system. This is not limited in this application.

(7) In this application, "communication" may also be described as "data transmission", "information transmission", "data processing", or the like. "Transmission" includes "sending" and "receiving".

(8) In this application, "sending information to XX (a device)" may be understood as that a destination of the information is the device, and may include directly or indirectly sending the information to the device. "Receiving information from XX (a device) or receiving information that is from XX (a device)" may be understood as that a source of the information is the device, and may include directly or indirectly receiving the information from the device. Information may undergo necessary processing, for example, a format change, between the source end for sending the information and the destination end. However, the destination end may understand valid information from the source end.

(9) The terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

It should be understood that, in some of the foregoing embodiments, a device in an existing network architecture is mainly used as an example for description. A specific form of the device is not limited in embodiments of this application. For example, all devices that can implement a same function in the future are applicable to embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining a first basis, wherein the first basis is a channel basis of a first network device, the first basis is formed by L columns of basis vectors, and L is a positive integer;
receiving a first reference signal sent by the first network device;
determining a first superposition coefficient vector based on the first reference signal and the first basis, wherein the first superposition coefficient vector comprises K superposition coefficients, and K is a positive integer less than or equal to L; and
sending the first superposition coefficient vector and a first basis selection vector to a second network device, wherein the first superposition coefficient vector, the first basis selection vector, and the first basis jointly represent a first channel matrix of the first network device, the first basis selection vector comprises K column indexes, and the K column indexes are indexes of basis vectors that are in the first basis and that correspond to the K superposition coefficients.

2. The method according to claim 1, wherein determining the first superposition coefficient vector based on the first reference signal and the first basis comprises:
determining a second channel matrix based on the first reference signal;
determining a second superposition coefficient vector based on the second channel matrix and a second basis, wherein the second basis is constructed in a row that is in the first basis and that corresponds to a position index of the first reference signal in spatial-frequency domain, a dimension of the second channel matrix is MN₁×1, a dimension of the second basis is MN₁×1, M is a quantity of antenna ports for receiving the first reference signal, N is a quantity of frequency domain units for carrying the first reference signal, the second superposition coefficient vector comprises L superposition coefficients, a dimension of the second superposition coefficient vector is L×1, M and N₁ are positive integers, and L is less than or equal to MN₁; and
determining the first superposition coefficient vector based on the second superposition coefficient vector, wherein the K superposition coefficients are K elements with largest amplitudes in the second superposition coefficient vector.

3. The method according to claim 2, wherein a smaller value of L indicates lower density of the first reference signal.

4. The method according to claim 2 or 3, wherein the method further comprises:
multiplying the first superposition coefficient vector by a third basis to obtain the first channel matrix, wherein the third basis is formed by columns that are in the first basis and that correspond to K position indexes in the first basis selection vector.

5. The method according to any one of claims 1 to 4, wherein the method further comprises:
receiving a second reference signal sent by the first network device and a third reference signal sent by the second network device, wherein time domain resources, frequency domain resources, and pilot sequences of the second reference signal and the third reference signal are the same;
determining a third channel matrix based on the second reference signal and the third reference signal, wherein the third channel matrix is a sum of a fourth channel matrix of the first network device and a first channel matrix of the second network device; and
determining a fourth channel matrix of the second network device based on the first channel matrix and the third channel matrix.

6. The method according to claim 5, wherein the method further comprises:
obtaining a fourth basis, wherein the fourth basis is a channel basis of the second network device, the fourth basis is formed by R columns of basis vectors, and R is a positive integer;
determining a third superposition coefficient vector based on the fourth channel matrix and the fourth basis, wherein the third superposition coefficient vector comprises Q superposition coefficients, and Q is a positive integer less than or equal to R; and
sending the third superposition coefficient vector and a second basis selection vector to the second network device, wherein the third superposition coefficient vector, the second basis selection vector, and the fourth basis jointly represent the fourth channel matrix of the second network device, the second basis selection vector comprises Q column indexes, and the Q column indexes are indexes of basis vectors that are in the fourth basis and that correspond to the Q superposition coefficients.

7. The method according to claim 6, wherein the first basis, the second basis, the third basis, or the fourth basis is a basis of a same type, and the basis of the same type is: a spatial-frequency joint basis, or a spatial domain basis and a frequency domain basis; and
the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

8. The method according to any one of claims 1 to 7, wherein the basis vector is any one of a discrete Fourier transform DFT basis vector, a fast Fourier transform FFT basis vector, an oversampled DFT basis vector, an oversampled FFT basis vector, or a vector determined based on a preset rule.

9. A communication method, comprising:
sending a first basis to a terminal device, wherein the first basis is a channel basis of a first network device, the first basis is formed by L columns of basis vectors, and L is a positive integer;
receiving a first superposition coefficient vector and a first basis selection vector, wherein the first superposition coefficient vector, the first basis selection vector, and the first basis jointly represent a first channel matrix of the first network device, the first superposition coefficient vector comprises K superposition coefficients, the first basis selection vector comprises K column indexes, the K column indexes are indexes of basis vectors that are in the first basis and that correspond to the K superposition coefficients, and K is a positive integer less than or equal to L; and
sending the first superposition coefficient vector and the first basis selection vector to the first network device.

10. The method according to claim 9, wherein the K superposition coefficients are K elements with largest amplitudes in a second superposition coefficient vector, the second superposition coefficient vector is determined based on a second channel matrix and a second basis, the second basis is constructed in a row that is in the first basis and that corresponds to a position index of a first reference signal sent by the first network device in spatial-frequency domain, the second channel matrix is determined based on the first reference signal, a dimension of the second channel matrix is MN₁×1, a dimension of the second basis is MN₁×L, M is a quantity of antenna ports for sending the first reference signal, N₁ is a quantity of frequency domain units for carrying the first reference signal, the second superposition coefficient vector comprises L superposition coefficients, a dimension of the second superposition coefficient vector is L×1, M and N₁ are positive integers, and L is less than or equal to MN₁.

11. The method according to claim 9 or 10, wherein the method further comprises:
receiving the first basis from a core network device.

12. The method according to claim 11, wherein receiving the first channel basis from the core network device comprises:
receiving a first channel map of the first network device from the core network device, wherein the first channel map comprises the first basis.

13. The method according to claim 12, wherein the method further comprises:
sending channel map request information to the core network device, wherein the channel map request information is used for requesting to obtain the first channel map.

14. The method according to any one of claims 9 to 13, wherein the method further comprises:
sending a fourth basis to the terminal device, wherein the fourth basis is a channel basis of a second network device, the fourth basis is formed by R columns of basis vectors, and R is a positive integer;
sending a third reference signal;
receiving a third superposition coefficient vector and a second basis selection vector, wherein the third superposition coefficient vector, the second basis selection vector, and the fourth basis jointly represent a fourth channel matrix of the second network device, the third superposition coefficient vector comprises Q superposition coefficients, Q is a positive integer less than or equal to R, the second basis selection vector comprises Q column indexes, and the Q column indexes are indexes of basis vectors that are in the fourth basis and that correspond to the Q superposition coefficients; and
determining the fourth channel matrix based on the fourth basis, the third superposition coefficient vector, and the second basis selection vector.

15. The method according to claim 14, wherein determining the fourth channel matrix based on the fourth basis, the third superposition coefficient vector, and the second basis selection vector comprises:
multiplying the third superposition coefficient vector by a fifth basis to obtain the fourth channel matrix, wherein the fifth basis is formed by columns that are in the fourth basis and that correspond to Q position indexes in the second basis selection vector.

16. The method according to claim 15, wherein the first basis, the second basis, the third basis, the fourth basis, or the fifth basis is a basis of a same type, and the basis of the same type is: a spatial-frequency joint basis, or a spatial domain basis and a frequency domain basis; and
the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

17. The method according to any one of claims 9 to 16, wherein the basis vector is any one of a discrete Fourier transform DFT basis vector, a fast Fourier transform FFT basis vector, an oversampled DFT basis vector, an oversampled FFT basis vector, or a vector determined based on a preset rule.

18. A communication method, comprising:
obtaining a first basis, wherein the first basis is a channel basis of a first network device, the first basis is formed by L columns of basis vectors, and L is a positive integer;
sending a first reference signal to a terminal device;
receiving a first superposition coefficient vector and a first basis selection vector, wherein the first superposition coefficient vector, the first basis selection vector, and the first basis jointly represent a first channel matrix of the first network device, the first channel matrix is determined based on the first reference signal, the first superposition coefficient vector comprises K superposition coefficients, the first basis selection vector comprises K column indexes, the K column indexes are indexes of basis vectors that are in the first basis and that correspond to the K superposition coefficients, and K is a positive integer less than or equal to L; and
determining the first channel matrix based on the first basis, the first superposition coefficient, and the first basis selection vector.

19. The method according to claim 18, wherein the K superposition coefficients are K elements with largest amplitudes in a second superposition coefficient vector, the second superposition coefficient vector is obtained based on a second channel matrix and a second basis constructed in a row that is in the first basis and that corresponds to a position index of the first reference signal sent by the first network device in spatial-frequency domain, the second channel matrix is determined based on the first reference signal, a dimension of the second channel matrix is MN₁×1, a dimension of the second basis is MN₁×L, M is a quantity of antenna ports for sending the first reference signal, N₁ is a quantity of frequency domain units for carrying the first reference signal, the second superposition coefficient vector comprises L superposition coefficients, a dimension of the second superposition coefficient vector is L×1, M and N₁ are positive integers, and L is less than or equal to MN₁.

20. The method according to claim 18 or 19, wherein determining the first channel matrix based on the first basis, the first superposition coefficient, and the first basis selection vector comprises:
multiplying the first superposition coefficient vector by a third basis to obtain the first channel matrix, wherein the third basis is formed by columns that are in the first basis and that correspond to K position indexes in the first basis selection vector.

21. The method according to any one of claims 18 to 20, wherein a smaller value of L indicates lower density of the first reference signal.

22. The method according to any one of claims 18 to 21, wherein the method further comprises:
sending a second reference signal to the terminal device, wherein the second reference signal is used for determining a fourth channel matrix of a second network device.

23. The method according to claim 20, wherein the first basis, the second basis, or the third basis is a basis of a same type, and the basis of the same type is: a spatial-frequency joint basis, or a spatial domain basis and a frequency domain basis; and
the spatial-frequency joint basis is a matrix constructed by one or more spatial-frequency domain basis vectors, the spatial domain basis is a matrix constructed by one or more spatial domain basis vectors, and the frequency domain basis is a matrix constructed by one or more frequency domain basis vectors.

24. The method according to any one of claims 18 to 23, wherein the basis vector is any one of a discrete Fourier transform DFT basis vector, a fast Fourier transform FFT basis vector, an oversampled DFT basis vector, an oversampled FFT basis vector, or a vector determined based on a preset rule.

25. A communication apparatus, comprising:
a unit configured to implement the method according to any one of claims 1 to 8; or a unit configured to implement the method according to any one of claims 9 to 17; or a unit configured to implement the method according to any one of claims 18 to 24.

26. A computer-readable storage medium, wherein the computer-readable storage medium stores a computer program or instructions, and when the computer program or the instructions are run,
the method according to any one of claims 1 to 8 is performed; or
the method according to any one of claims 9 to 17 is performed; or
the method according to any one of claims 18 to 24 is performed.

27. A communication system, comprising a terminal device, a first network device, and a second network device, wherein the terminal device is configured to perform the method according to any one of claims 1 to 8, the first network device is configured to perform the method according to any one of claims 18 to 24, and the second network device is configured to perform the method according to any one of claims 9 to 17.
